# EUROPEAN PATENT APPLICATION

(11) **EP 2 704 023 A2**
(43) Date of publication of application: **05.03.2014**
(21) Application number: 13179077.6
(22) Date of filing: 02.08.2013
(51) Int. Cl.: G06F 13/42, H04L 12/801

(54) **Data transfer apparatus, data transfer method, and data transfer program**

(30) Priority: 31.08.2012 JP 2012191316
(71) Applicant: FUJITSU LIMITED, Kawasaki-shi, Kanagawa 211-8588 (JP)
(72) Inventor: Negishi, Tatsuhiko, Kanagawa, 211-8588 (JP); Shirase, Kenji, Kanagawa, 211-8588 (JP)
(74) Representative: HOFFMANN EITLE

(57) **Abstract**

A data transfer apparatus includes a received-packet storage unit that is capable of storing received packets and retrieving the stored packets in an order different from the order in which these packets were received. The data transfer apparatus retrieves a packet from the received-packet storage unit in accordance with a request from a transfer-destination apparatus. When a packet initially received from a source apparatus from among the packets stored in the received-packet storage unit is retrieved, the data transfer apparatus transmits to the source apparatus a credit updated value that is proportional to the size of data that can be stored in the received-packet storage unit.

## Description

### FIELD

The embodiments discussed herein are related to a technology for controlling data transfer.

### BACKGROUND

A data transfer apparatus stores packets received from a source apparatus in a buffer and then transmits the packets stored in the buffer to a transfer-destination apparatus in order of reception. Such a data transfer apparatus performs credit-scheme flow control wherein, when a free space is provided within the buffer, the data transfer apparatus reports the number of packets the buffer can receive to the source apparatus and receives packets from the source apparatus in accordance with the reported number of packets the buffer can receive.

In a related art, a transmitting side receives, from a receiving side, information indicating the sequence number of data received without error by the receiving side and information indicating the sequence number of data that occupied a buffer released by the receiving side. Using the received information, the transmitting side determines the number of reception buffers occupied by the data received without error by the receiving side. A technology is known wherein, when the number of reception buffers is higher than a higher threshold, the transmitting side decreases the maximum value, and, when the number of reception buffers is lower than a lower threshold, the transmission side increases the maximum value, with the result that a maximum throughput is achieved that conforms to the speed at which the buffers are released. A receiving-side apparatus measures a time period Ta from transmission of an initial credit value from the receiving-side apparatus to reception of the initial packet by the receiving side. The receiving-side apparatus determines a credit value Cn satisfying Ta+Tp× (Cn-1) <Tp×Ci, where Tp indicates the period of time required to transmit one packet, Ci indicates the value of the initial credit, and Cn indicates the credit value at the time of communication. A technology is known wherein, using the maximum value of the credit value Cn in packet transmission, the receiving-side apparatus determines an optimum credit value from the distance to and the speed of communication with a communication partner every time a connection is established, so as to always perform communication with maximum throughput.

Japanese Examined Patent Application Publication No. 8-21969

Japanese Laid-open Patent Publication No. 9-205442

### SUMMARY

A data transfer apparatus described hereinafter is aimed at improving the throughput of data transfer.

In accordance with one aspect of an embodiment, a data transfer apparatus includes a received-packet storage unit, a controlling circuit, and a transmitting unit. The received-packet storage unit may store packets received from a source apparatus and retrieve the stored packets in an order different from an order in which these packets were received. When an oldest packet, which is a packet initially received from the source apparatus, is retrieved from the packets stored in the received-packet storage unit, the controlling circuit performs a process of outputting a request to update a credit value that indicates the size of data which the received-packet storage unit can receive. The transmitting unit transmits to the source apparatus the request to update a credit value output from the controlling circuit.

The object and advantages of the invention will be realized and attained by means of the elements and combinations particularly pointed out in the claims.

### BRIEF DESCRIPTION OF DRAWINGS

FIG. 1 is a functional block diagram illustrating an example of a data transfer apparatus.

FIG. 2 is a functional block diagram illustrating an example of a received-packet storage unit.

FIG. 3 is a functional block diagram illustrating an example of a transmission-packet storage unit.

FIG. 4 is a block diagram illustrating an example of a data transfer apparatus.

FIG. 5 is a flowchart illustrating details of processes of data transfer.

FIG. 6A and FIG. 6B depict tables illustrating examples of data within an address table.

FIG. 7 is a flowchart illustrating details of a process of specifying an address of oldest data.

FIG. 8A to FIG. 8D are an explanatory diagram illustrating a process of specifying an address of oldest data.

FIG. 9 is a flowchart illustrating details of a process of updating a credit value.

FIG. 10A to FIG. 10D are an explanatory diagram chronologically illustrating an update determination on a credit value.

FIG. 11A to FIG. 11D are an explanatory diagram illustrating for each pattern an update determination on a credit value.

FIG. 12A to FIG. 12D are an explanatory diagram chronologically illustrating updating of a latest overtake packet.

FIG. 13A to FIG. 13D are an explanatory diagram illustrating updating of a latest overtake packet for each pattern.

FIG. 14A and FIG. 14B are a table illustrating values stored in an address table in transferring of data.

FIG. 15A and FIG. 15B are a table illustrating values stored in an address table in transferring of data.

FIG. 16A and FIG. 16B are a table illustrating values stored in an address table in transferring of data.

FIG. 17 is a table illustrating values stored in an address table in transferring of data.

FIG. 18A and FIG. 18B are a table illustrating values stored in an address table in transferring of data.

FIG. 19 is a functional block diagram provided under a condition in which a data transfer apparatus in accordance with an embodiment is applied to PCIe.

FIG. 20 is a flowchart illustrating details of a process of transferring data in writing of data to a memory under a condition in which a data transfer apparatus in accordance with an embodiment is applied to PCIe.

FIG. 21 is an explanatory diagram illustrating effects achieved by a data transfer apparatus in accordance with an embodiment.

FIG. 22 is an explanatory diagram illustrating effects achieved by a data transfer apparatus in accordance with an embodiment.

### DESCRIPTION OF EMBODIMENTS

When an order in which packets are received from a source apparatus is different from an order in which the packets are transmitted to a transfer-destination apparatus, the throughput of data transfer of a data transfer apparatus may be decreased since transmission of a subsequently received packet is held up.

Accordingly, the embodiment provides a technology for improving the throughput of data transfer.

A data transfer apparatus in accordance with an embodiment will be described.

The data transfer apparatus transfers a packet received from a source apparatus to a transfer-destination apparatus.

The data transfer apparatus in accordance with the embodiment includes a reception buffer that is capable of retrieving stored packets in an order different from an order in which these packets were received (hereinafter referred to as a "received-packet storage unit"). The data transfer apparatus receives and stores a packet from a source apparatus in the received-packet storage unit. The data transfer apparatus retrieves packets from the received-packet storage unit in an order requested by a transfer-destination apparatus and transmits the retrieved packets to the transfer-destination apparatus.

The data transfer apparatus determines whether or not a packet that was initially received from the source apparatus (hereinafter referred to as an "oldest packet") from among the packets stored in the received-packet storage unit has been retrieved. Determining that the oldest packet has been retrieved from the received-packet storage unit, the data transfer apparatus transmits to the source apparatus a credit updated value corresponding to the size of packets that have become newly storable in order to report the size of receivable (storable) data.

As described above, in accordance with a request from the transfer-destination apparatus, before retrieving the oldest packet, the data transfer apparatus in accordance with the embodiment may retrieve a subsequent packet received after the oldest packet from the source apparatus, so the data transfer apparatus does not need to hold up transmission of the subsequent packet. Accordingly, the data transfer apparatus in accordance with the embodiment may improve the throughput of data transfer.

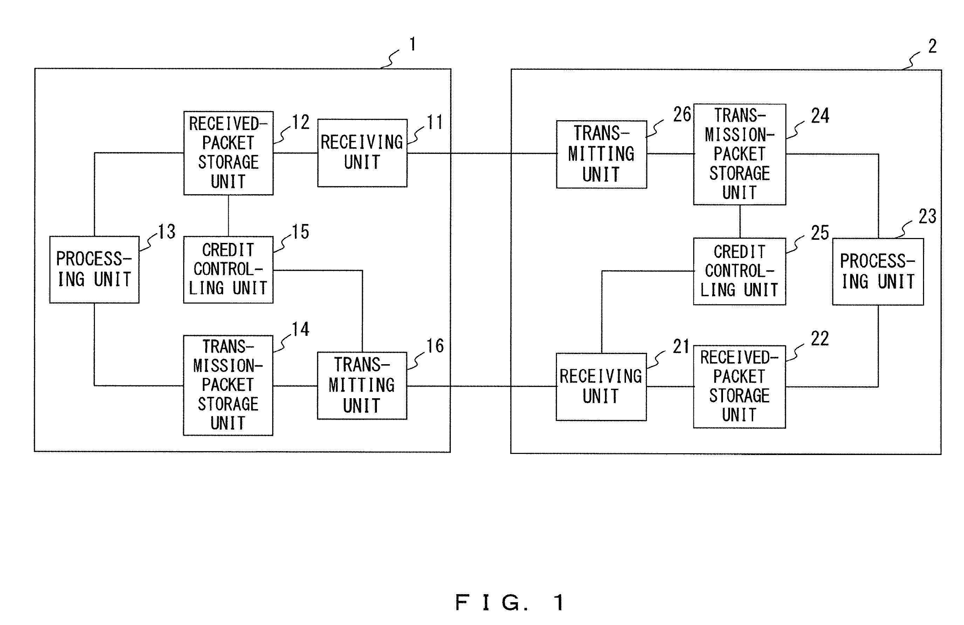

FIG. 1 is a functional block diagram illustrating an example of a data transfer apparatus.

In FIG. 1, a data transfer apparatus includes a receiving unit 11, a received-packet storage unit 12, a processing unit 13, a transmission-packet storage unit 14, a credit controlling unit 15, and a transmitting unit 16. A data transfer apparatus 2 includes the same functions as the data transfer apparatus 1. The functions of the data transfer apparatus 1 will be described in the following. The data transfer apparatus 2 has functions with the same names as those of the data transfer apparatus 1, and descriptions of the functions of the data transfer apparatus 2 are omitted herein. Descriptions will be given on the assumption that the data transfer apparatus 2 is a source apparatus. Although not illustrated in the drawings, a transfer-destination apparatus is connected to the processing unit 13. The data transfer apparatus 1 is applied to, for example, a route complex of PCIe (PCI Express) and a peripheral apparatus (a graphic card, a disk drive, and an external I/O card).

The receiving unit 11 receives a packet that includes a request made by the data transfer apparatus 2 for the processing unit 13 to perform data processing.

Packets transmitted from the data transfer apparatus 2 include, for example, posted packets, for which the transfer-destination apparatus returns no response to the source apparatus, and non-posted packets, for which the transfer-destination apparatus returns a response to the source apparatus.

The posted packets and the non-posted packets include packets that include a header and data, and packets that include a header and do not include data.

The received-packet storage unit 12 stores packets received from the data transfer apparatus 2. The received-packet storage unit 12 may retrieve the stored packets in an order different from an order in which these packets were received, and outputs the stored packets in accordance with a request to retrieve the packets that is made by the processing unit 13. The received-packet storage unit 12 includes a header-storage region that is a memory region in which a header included in the packet is stored. The received-packet storage unit 12 also includes a data-storage region that is a memory region in which data included in the packet is stored.

The received-packet storage unit 12 receives, for example, a posted packet and a non-posted packet from the data transfer apparatus 2. The received-packet storage unit 12 stores the header and data of the posted packet in one region and the header and data of the non-posted packet in another region. For simplicity, the following descriptions will be given on the assumption that the data transfer apparatus 1 receives only one of the posted packet and the non-posted packet from the data transfer apparatus 2. Unless otherwise specified, both the posted packet and the non-posted packet will simply be referred to as a "packet". In order to receive a plurality of types of packets, such as posted packets and non-posted packets, the data transfer apparatus 1 may include a header-storage region and a data-storage region for each type of received packet.

The processing unit 13 performs data processing in accordance with a request to perform data processing which is included in the header of a packet stored in the received-packet storage unit 12. When a data processing is performed continuously after a data processing is finished on data included in one packet, the processing unit 13 performs a process of retrieving a packet required for the next data processing from the received-packet storage unit 12. In this case, the processing unit 13 outputs a packet-retrieval request to the received-packet storage unit 12. In order to output to the processing unit 13 packets for which retrieval requests have been made in an order in which the packet-retrieval requests from the processing unit 13 are input, the received-packet storage unit 12 may output the packets in an order different from an order in which these packets were received from the data transfer apparatus 2.

As an example, when a posted packet that includes a header with a write request and that includes data to be written is input from the received-packet storage unit 12, the processing unit 13 performs a process of writing data to a memory (not illustrated) (a transfer-destination apparatus) connected to the processing unit 13 via a host bus. Receiving, for example, a packet to be subsequently read that includes a packet identifier from the connected memory, the processing unit 13 performs a process of retrieving a header and data in which both correspond to the identifier from the received-packet storage unit 12. Then, the processing unit 13 generates a packet that includes the header and the data retrieved from the received-packet storage unit 12 and transmits this packet to the memory via the host bus. The identifier of the subsequently read packet includes, for example, the address of the packet or a sequence number included in the header. In the process of retrieving a header and data in which both correspond to an identifier from the received-packet storage unit 12, the header and the data are extracted and retrieved by referencing an address table, which stores, for example, an address of a packet and a sequence number included in a header (this table will be described hereinafter).

The transmission-packet storage unit 14 includes a packet-storage region and stores a packet to be transmitted to the data transfer apparatus 2 in the packet-storage region. The transmission-packet storage unit 14 outputs the packets stored in the packet-storage region in an order in which these packets were stored. Packets may be prioritized so that the transmission-packet storage unit 14 can output the packets stored in the packet-storage region in order of priority.

Meanwhile, the transmission-packet storage unit 14 receives a header-credit updated value that indicates the number of headers that has become newly receivable by a receiving unit 21 upon the retrieving of packets stored in the receiving unit 21 of the data transfer apparatus 2 (corresponding to the number of retrieved packets). The transmission-packet storage unit 14 totalizes (counts) received header-credit updated values to calculate a credit value that indicates the size of transmittable headers. The transmission-packet storage unit 14 may receive a header-credit updated value that indicates the number of headers receivable by the data transfer apparatus 2 and may define the received header-credit updated value as a credit value. The header-credit updated value will hereinafter indicate the number of headers that have become newly receivable by the receiving unit 21 (i.e., a number corresponding to the number of retrieved packets).

The transmission-packet storage unit 14 also receives a data-credit updated value that is proportional to the size of data that has become newly receivable by the receiving unit 21 upon the retrieving of packets stored in the receiving unit 21 of the data transfer apparatus 2 (i.e., data corresponding to retrieved packets). The transmission-packet storage unit 14 totalizes (counts) received data-credit updated values to calculate a credit value that indicates the size of transmittable data. The transmission-packet storage unit 14 may receive a data-credit updated value indicating a value that is proportional to the size of data receivable by the data transfer apparatus 2 and may define the received data-credit updated value as a credit value. The data-credit updated value will hereinafter indicate a value that is proportional to the size of data that have become newly receivable by the receiving unit 21 (i.e., data corresponding to retrieved packets).

The transmission-packet storage unit 14 outputs a packet when a data credit value indicates that data whose size is equal to or larger than the size of data included in a packet to be transmitted is transmittable and a header credit value is one or higher.

Upon the outputting of a packet, the transmission-packet storage unit 14 decrements the header credit value. Upon the outputting of a packet, the transmission-packet storage unit 14 subtracts a value that is proportional to the size of data from the data credit value.

When an oldest packet, which is a packet initially received from a source apparatus from among the packets stored in the received-packet storage unit, is retrieved, the credit controlling unit 15 outputs to the source apparatus a request to update the credit value.

The credit controlling unit 15 determines whether subsequent packets include a packet retrieved from the received-packet storage unit 12 prior to the retrieving of the oldest packet (this retrieved packet will hereinafter be referred to as an "overtake packet"). When overtake packets are present, the credit controlling unit 15 determines a packet received most recently from the source apparatus from among the overtake packets (hereinafter referred to as a "latest overtake packet"). When the oldest packet has been retrieved from the received-packet storage unit 12 and all of the subsequent packets received prior to the latest overtake packet have been retrieved, the credit controlling unit 15 may output a request to update the credit value.

The transmitting unit 16 transmits to the data transfer apparatus 2 the request to update the credit value that has been output from the credit controlling unit 15. The transmitting unit 16 also transmits to the data transfer apparatus 2 a header-credit updated value and a data-credit updated value, both of which have been output from the credit controlling unit 15. Moreover, the transmitting unit 16 transmits to the data transfer apparatus 2 a packet output from the transmission-packet storage unit 14.

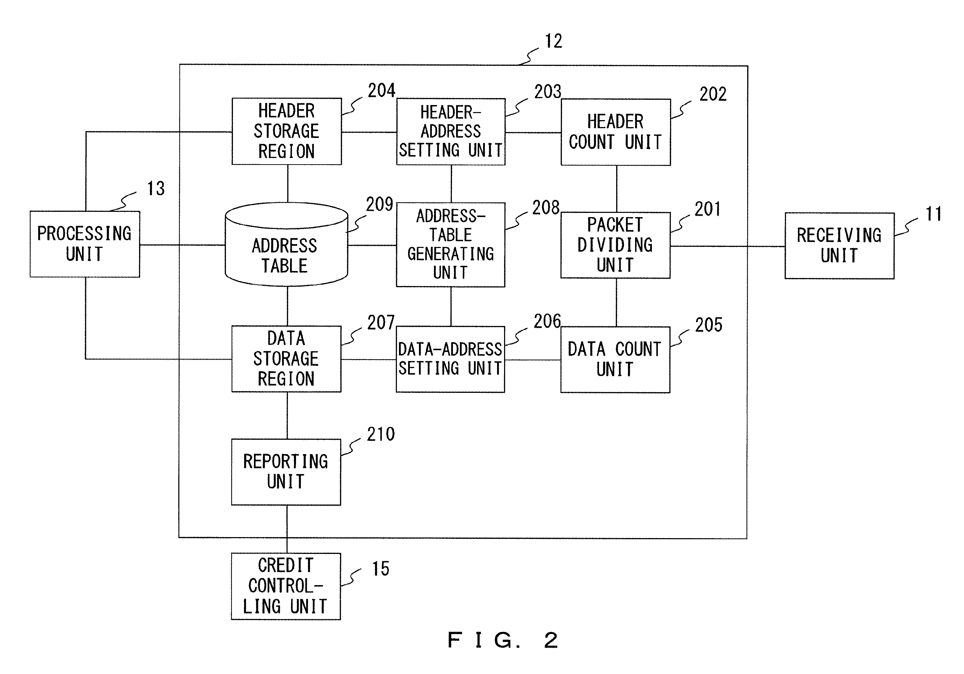

FIG. 2 is a functional block diagram illustrating an example of a received-packet storage unit.

With reference to FIG. 2, functions of the received-packet storage unit 12 in accordance with an embodiment will be described in more detail.

In FIG. 2, the received-packet storage unit 12 includes a packet dividing unit 201, a header count unit 202, a header-address setting unit 203, a header storage region 204, a data count unit 205, a data-address setting unit 206, a data storage region 207, an address-table generating unit 208, an address table 209, and a reporting unit 210.

Every time the packet dividing unit 201 receives a packet received from the data transfer apparatus 2, the packet dividing unit 201 divides the packet into a header and data. The packet dividing unit 201 outputs to the header count unit 202 the header obtained from the dividing. The packet dividing unit 201 also outputs to the data count unit 205 the data obtained from the dividing.

Upon the inputting of the header from the packet dividing unit 201, the header count unit 202 cyclically counts a value that is proportional to the size of the input header until the value becomes equal to the number of header addresses that designate memory regions of the header storage region 204 in which headers are stored.

As an example, when the size of the header storage region 204 is 128 bytes and the size of a storage region allocated to each header address is 8 bytes, the header count unit 202 may count until 128 bytes/8 bytes=16 is reached. In this case, the number of header addresses set for the header storage region 204 is 16.

In addition, when the size of a header is 16 bytes, every time a header is input, the header count unit 202 adds, to the count value, 16 bytes/8 bytes=2, which is the number of header addresses that corresponds to a memory region required to store one header. In this case, when the size of the header storage region 204 is 128 bytes, the maximum credit value is 128 bytes/16 bytes=8.

Every time a header is input and a new count value (a header count value) is counted, the header count unit 202 outputs the header count value to the header-address setting unit 203. The header count unit 202 also outputs the input header to the header-address setting unit 203.

The header-address setting unit 203 sets a header address that designates a memory region in which the header input from the header count unit 202 is stored.

The header-address setting unit 203 preserves the header count value input from the header count unit 202. As a header address that is set for the header input from the header count unit 202, the header-address setting unit 203 may define the header count value counted by the header count unit 202 when the previous packet was received from the data transfer apparatus 2. Accordingly, the header-address setting unit 203 may store the input header in the header storage region 204 without overwriting another header.

The header-address setting unit 203 outputs to the header storage region 204 the header and the header address that has been set. In addition, the header-address setting unit 203 outputs to the address-table generating unit 208 the header address that has been set.

The header storage region 204 is a memory region to store the header included in the packet received from the data transfer apparatus 2. Upon the inputting of the header and the header address from the header-address setting unit 203, the header storage region 204 stores the input header in a region designated by the input header address. Meanwhile, in accordance with a packet-retrieval request from the processing unit 13, the header storage region 204 outputs to the processing unit 13 a header included in the packet for which the retrieval request has been made.

The data count unit 205 adds 1 bit as a most significant bit to a value that is equal to the number of data addresses set in the data storage region 207 and cyclically counts the value until the value becomes twice the number of data addresses that designate memory regions in which data is stored. Upon the inputting of data from the packet dividing unit 201, the data count unit 205 divides the size of the input data by the size of a memory region allocated to each data address and adds the quotient to the count value. When a value with a decimal is calculated from the dividing of the size of input data by the size of a memory region allocated to each data address, the data count unit 205 rounds the value up to the nearest integer. The data count unit 205 may have a simple configuration without the addition of a most significant bit.

As an example, when the size of the data storage region 207 is 16384 bytes and the size of the memory region allocated for each data address is 8 bytes, the data count unit 205 counts the value until 2 (a most significant bit)x16384 bytes/8 bytes=4096 is reached. In this case, the number of data addresses of the data storage region 207, which the received-packet storage unit 12 has as regions in which data included in packets is to be stored, is 2048.

As another example, when the size of input data is 2048 bytes and the size of the storage region allocated for each data address is 8 bytes, the data count unit 205 adds 2048 bytes/8 bytes=256 as the count value. When, for example, the size of input data is 2044 bytes, 2044 bytes/8 bytes=255.5, but the data count unit 205 adds 256 as the count value since the storage region is allocated for each data address.

When, for example, the size of the data storage region is 16384 bytes and the size of the storage region allocated for each data address is 8 bytes, the data count unit 205 switches 0 and 1 of the most significant bit upon the count value reaching 2048 (=0). Then, the data count unit 205 cyclically counts bits lower than the most significant bit.

Every time data is input and a new count value (hereinafter referred to as a "data count value") is calculated, the data count unit 205 outputs the data count value to the data-address setting unit 206. The data count unit 205 also outputs the input data to the data-address setting unit 206.

The data-address setting unit 206 sets a data address that designates a memory region in which the data input from the data count unit 205 is stored.

The data-address setting unit 206 preserves the data count value input from the data count unit 205. Then, as a data address that is set for the data input from the data count unit 205, the data-address setting unit 206 defines the value counted by the data count unit 205 when the previous packet was received from the data transfer apparatus 2, but with the most significant bit subtracted from this value. Accordingly, the data-address setting unit 206 may store the input data in the data storage region 207 without overwriting another piece of data.

The data-address setting unit 206 outputs to the data storage region 207 the data and the data address that has been set. In addition, the data-address setting unit 206 outputs to the address-table generating unit 208 the most significant bit and the data address, both of which have been set.

The data storage region 207 is a memory region to store the data included in the packet received from the data transfer apparatus 2. Upon the inputting of the data and the data address from the data-address setting unit 206, the data storage region 207 stores the input data in a region designated by the input data address. Meanwhile, in accordance with a packet-retrieval request from the processing unit 13, the data storage region 207 outputs to the processing unit 13 the data included in a packet for which the retrieval request has been made.

The address-table generating unit 208 associates the header address set by the header-address setting unit 203 with header identification information identifying the header stored in the memory region designated by the header address and then outputs these elements associated with each other to the address table 209. In addition, the address-table generating unit 208 associates the most significant bit and the data address, both set by the data-address setting unit 206 with the data identification information identifying the data stored in the memory region designated by the data address and outputs these elements associated with each other to the address table 209. As the header identification information, the address-table generating unit 208 may extract from the header, for example, information such as name information with which the header is identifiable. As the data identification information, the address-table generating unit 208 may extract from the data, for example, information such as name information with which the data is identifiable.

The address-table generating unit 208 subtracts the data address previously input from the data-address setting unit 206 from the currently input data address and multiplies the obtained value by the size of a memory region allocated to each data address. In this way, the address-table generating unit 208 calculates the size of the currently input data. The address-table generating unit 208 may output the size of the currently input data to the address table 209.

The address-table generating unit 208 may subtract the header address previously input from the header-address setting unit 203 from the currently input header address, so as to calculate and output, to the address table 209, the size of the currently input header.

The address table 209 stores information input from the address-table generating unit 208. The address table 209 also stores information indicating whether or not data stored in a memory region corresponding to a data address has been retrieved (this information will hereinafter be referred to as "effectivity").

For each packet, the address table 209 stores, for example, information that associates a header address, header identification information, the size of a header, a data address, data identification information, the size of data, and effectivity with each other. If necessary, the address table 209 may store other data, such as directory entries (e.g., the name of a packet, a date on which the packet started to be stored, a time at which the packet started to be stored, and the attribute of the packet) and allocation information (e.g., the status of use of the region in which the packet is stored).

Upon the retrieving of a packet from the received-packet storage unit 12, the reporting unit 210 references the address table 209 and reports to the credit controlling unit 15 the data address of data included in the retrieved packet.

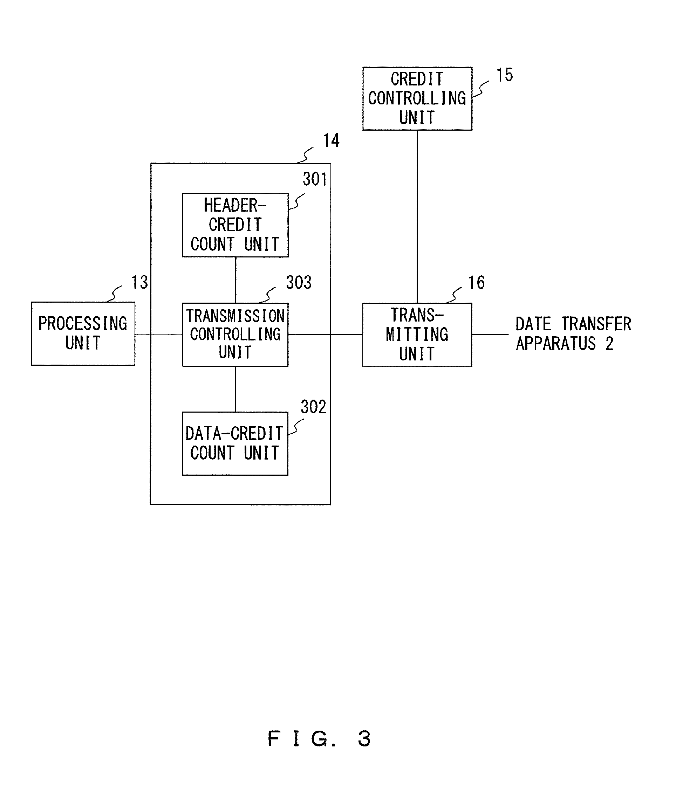

FIG. 3 is a functional block diagram illustrating an example of a transmission-packet storage unit.

With reference to FIG. 3, functions of the transmission-packet storage unit 14 in accordance with an embodiment will be described in more detail.

In FIG. 3, the transmission-packet storage unit 14 includes a header-credit count unit 301, a data-credit count unit 302, and a transmission controlling unit 303. The following descriptions will be given on the assumption that packets are transmitted and received between the data transfer apparatuses 1 and 2. Each one of the data transfer apparatuses 1 and 2 serves as both a source apparatus and a destination apparatus with respect to the other apparatus.

The header-credit count unit 301 counts a header-credit updated value received from the data transfer apparatus 2 so as to calculate a header-credit value.

When the header-credit count unit 301 transmits a packet to the data transfer apparatus 2, the header-credit count unit 301 decrements a header credit value.

The data-credit count unit 302 counts a data-credit updated value received from the data transfer apparatus 2 so as to calculate a data-credit value.

When the data-credit count unit 302 transmits a packet to the data transfer apparatus 2, the data-credit count unit 302 subtracts a value that is proportional to the size of data included in the packet from the data credit value.

When the data credit value indicates that data whose size is equal to or larger than the size of data included in a packet to be transmitted is transmittable and the header credit value is one or higher, the transmission controlling unit 303 retrieves a packet from a packet storage region (not illustrated). Then, the transmission controlling unit 303 outputs the retrieved packet to the transmitting unit 16 and performs control to transmit the packet to a transfer-destination apparatus via the transmitting unit 16.

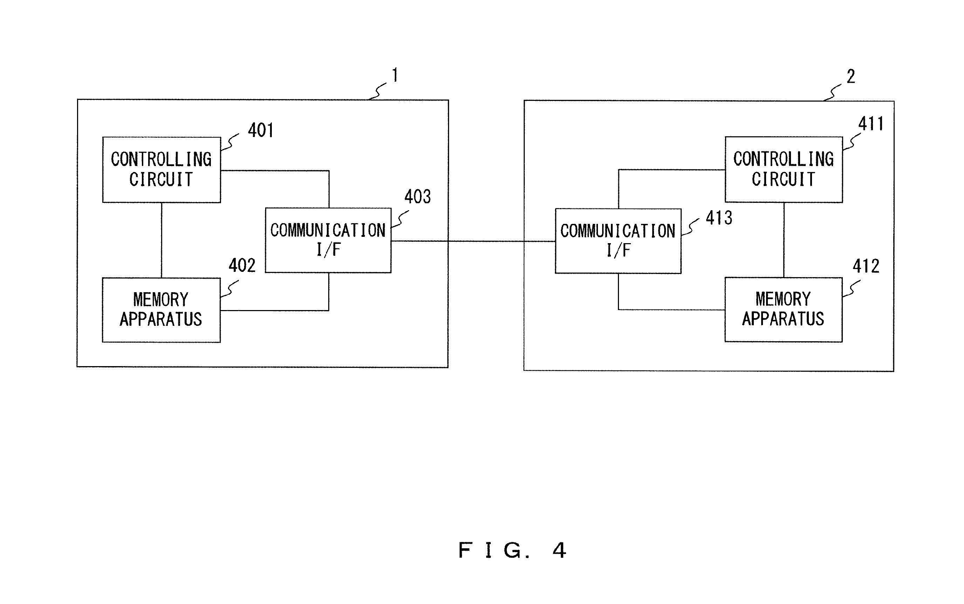

FIG. 4 is a block diagram illustrating an example of a data transfer apparatus.

In FIG. 4, the data transfer apparatuses 1 includes a controlling circuit 401, a memory apparatus 402, and a communication interface 403. The data transfer apparatus 2 has the same configuration as the data transfer apparatus 1. Thus, in the following, the configuration of the data transfer apparatus 1 will be described, and the configuration of the data transfer apparatus 2 will not be described.

The controlling circuit 401 controls the entirety of the data transfer apparatus 1. The controlling circuit 401 is, for example, a processor such as a CPU, a multi-core CPU, an FPGA (Field Programmable Gate Array), or a PLD (Programmable Logic Device). In FIG. 1, the controlling circuit 401 functions as a portion of the received-packet storage unit 12, the processing unit 13, the transmission-packet storage unit 14, and the credit controlling unit 15. In FIG. 2, the controlling circuit 401 functions as the packet dividing unit 201, the header count unit 202, the header-address setting unit 203, the data count unit 205, the data-address setting unit 206, the address-table generating unit 208, and the reporting unit 210. In addition, in FIG. 3, the controlling circuit 401 functions as the header-credit count unit 301, the data-credit count unit 302, and the transmission controlling unit 303.

The memory apparatus 402 stores various data. The memory apparatus 402 is, for example, a memory such as a ROM (Read Only Memory) or a RAM (Random Access Memory), or an HD (Hard Disk). The ROM stores a program such as a boot program. The RAM is used as a work area of the controlling circuit 401. The HD stores programs such as an OS (Operating System), an application program, and firmware, and stores various data. In FIG. 2, the memory apparatus 402 functions as the header storage region 204, the data storage region 207, and the address table 209. The address table 209 may be stored in a portion of the header storage region 204 or the data storage region 207 or may be stored in another memory region of the memory apparatus 402.

The memory apparatus 402 stores a data transfer program to cause the controlling circuit 401 to function as the received-packet storage unit 12, the processing unit 13, the transmission-packet storage unit 14, the credit controlling unit 15, the packet dividing unit 201, the header count unit 202, the header-address setting unit 203, the data count unit 205, the data-address setting unit 206, the address-table generating unit 208, the reporting unit 210, the header-credit count unit 301, the data-credit count unit 302, and the transmission controlling unit 303. Upon the data transfer apparatus 1 starting to transfer data, the controlling circuit 401 reads and loads in a RAM the data transfer program stored in the memory apparatus 402. Accordingly, the controlling circuit 401 controls the entirety of the data transfer apparatus 1 by causing the RAM to be operated as a work space. As long as the controlling circuit 401 can access the data transfer program via the communication interface 403, the data transfer program may be stored in a server on a network or may be stored in various recording media via a reading apparatus. As an example, a recording medium (a computer-readable recording medium) is connected to a bus via a reading apparatus (not illustrated), and data is read from or written to the recording medium via the controlling circuit 401 controlling the reading apparatus. The recording medium is, for example, an FD (Floppy Disk), a CD (Compact Disc), a DVD (Digital Versatile Disk), a BD (Blu-ray ^{®} Disk), or a flash memory.

The communication interface 403 connects the data transfer apparatus 1 communicably to another apparatus via a bus, power line communication, a LAN (Local Area Network), radio communication, or a network such as the internet. In FIG. 1, the communication interface 403 functions as the receiving unit 11 and the transmitting unit 16.

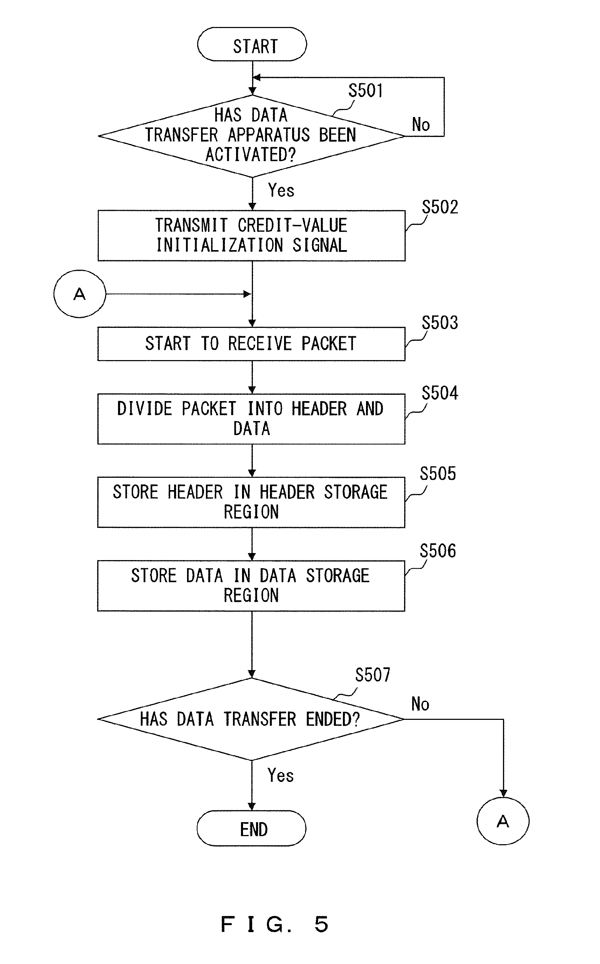

FIG. 5 is a flowchart illustrating details of processes of data transfer.

FIG. 5 depicts details of the process series from a process in which the data transfer apparatus 1 divides a packet received from the data transfer apparatus 2 into a header and data to a process in which the data transfer apparatus 1 respectively stores the header and the data in the header storage region 204 and the data storage region 207 of the received-packet storage unit 12.

When the data transfer apparatus 2 makes a request to transmit a packet that includes a request to be given to the processing unit 13 of the data transfer apparatus 1, the data transfer apparatus 1 is activated (S501).

Upon the activation, the data transfer apparatus 1 transmits to the data transfer apparatus 2 a credit-value initialization signal that includes a header credit value and a data credit value (S502). Upon receipt of the credit-value initialization signal, the data transfer apparatus 2 updates the header credit value and the data credit value, both of which are stored in a received-packet storage unit 22 (the header-credit count unit 301 and the data-credit count unit 302), to the values indicated by the credit-value initialization signal. The values indicated by the credit-value initialization signal may be the number of headers which the received-packet storage unit 12 can store and the maximum credit value that depends on the size of the data, or may be values selected as appropriate.

The transmission controlling unit 303 of the data transfer apparatus 2 transfers data on a packet-by-packet basis when the header credit value is one or higher and the data credit value indicates that data whose size is equal to or larger than the size of the data included in the packet to be transmitted is transmittable. Accordingly, the data transfer apparatus 1 starts to receive packets transmitted from the data transfer apparatus 2 (S503).

Upon receipt of a packet, the packet dividing unit 201 of the data transfer apparatus 1 divides the received packet into a header and data (S504).

The header-address setting unit 203 sets a header address and stores the header obtained from the dividing in the header storage region 204 (S505).

The data-address setting unit 206 sets a data address and stores the data obtained from the dividing in the data storage region 207 (S506).

Next, the data transfer apparatus 1 determines whether or not the transfer has ended (S507), and when the data transfer apparatus 1 determines that the data transfer has not ended(No in S507), the data transfer apparatus 1 repeats the processes of S503 to S507.

In S507, when the data transfer apparatus 1 determines that the data transfer has ended (Yes in S507), the data transfer apparatus 1 ends the data transfer process. As an example, upon receipt of a transfer-end signal from the data transfer apparatus 2 that indicates that the transferring of a data signal has ended, the data transfer apparatus 1 may determine that the data transfer has ended.

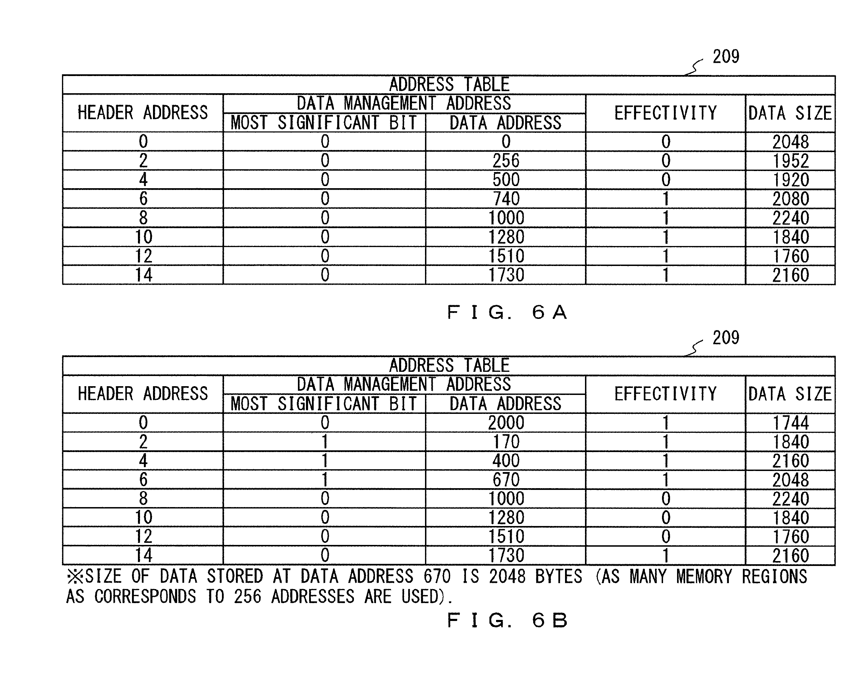

FIG. 6A and FIG. 6B depict tables illustrating examples of data within an address table.

In FIG. 6A and FIG. 6B, the address table 209 stores header addresses, data management addresses (most significant bits and data addresses), effectivities, and data sizes. Although not illustrated, the address table 209 also stores header identification information and data identification information. For simplicity of description, the header addresses and the data addresses in FIG. 6A and FIG. 6B are expressed in decimal notation. The following descriptions are based on the assumption that the size of a storage region allocated for each address is 8 bytes. The size of a header is 16 bytes. The size of a header storage region is 128 bytes. The size of a data storage region is 16384 bytes.

In FIG. 6A, the header addresses indicate that a memory region of 8 bytesx2 addresses=16 bytes is provided to store one header. The maximum value of the header address is 128 bytes/8 bytes=16. Thus, it is indicated that at most eight headers can be stored in the header storage region.

In FIG. 6A, the data management address includes most significant bits and data addresses. Every time data included in a packet received from the data transfer apparatus 2 is stored in the received-packet storage unit 12, the number of used addresses is added to the data address. Every time the data address becomes 16384 bytes/8 bytes=2048, 0 and 1 of the most significant bit are switched. The data address cyclically counts from 0 to 2047.

Effectivity indicates whether or not a header stored at a corresponding header address and data stored at a corresponding data address (hereinafter referred to as a "corresponding packet") have been retrieved. An effectivity of 0 indicates the corresponding packet has been retrieved. An effectivity of 1 indicates that the corresponding packet has been stored but has not been retrieved yet. When the effectivity is 0, the received-packet storage unit 12 may allow a corresponding memory region to be overwritten with a packet.

A data size indicates the size of data stored at a corresponding data address.

FIG. 6B provides the values of the address table 209 illustrated in FIG. 6A but with the headers stored at header addresses 6 to 13 and the data stored at data addresses 740 to 1729 being retrieved. In addition, FIG. 6B provides the values of the address table 209 illustrated in FIG. 6A with new headers being stored at header addresses 0 to 7 and new data being stored at data addresses 2000 to 926. In the following descriptions, for simplicity, a situation in which the headers stored at header addresses 6 to 13 and the data stored at data addresses 740 to 1729 have been retrieved will be expressed as "packets corresponding to header addresses 6 to 13 have been retrieved".

In FIG. 6B, the most significant bit of data address 2000 is different from that of data address 170. This indicates that data of the packet corresponding to header address 0 are stored at 2000 to 2047 and 0 to 170 of the data storage region 207.

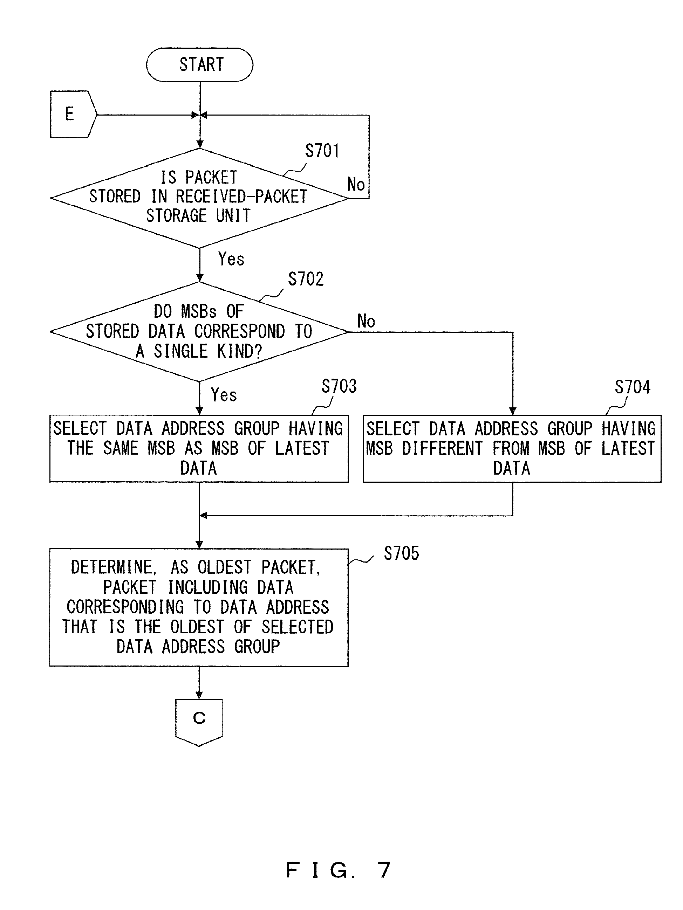

FIG. 7 is a flowchart illustrating details of a process of specifying an address of oldest data.

FIG. 7 is a flowchart illustrating details of processes performed when the credit controlling unit 15 determines an oldest packet from among packets stored in the received-packet storage unit 12.

When data transfer starts or a request to update a credit value is output, the credit controlling unit 15 determines whether or not a packet is stored in the received-packet storage unit 12 (S701). The credit controlling unit 15 repeats S701 until a packet is stored in the received-packet storage unit 12 (No in S701).

When a packet is stored in the received-packet storage unit 12 (Yes in S701), the credit controlling unit 15 determines whether or not the most significant bits (MSBs) of the stored data correspond to a single kind (S702).

When the most significant bits are of a single type (Yes in S702), the credit controlling unit 15 selects, as a target that is searched to find an oldest packet, a data-address group having the same most significant bit as the most significant bit of the address at which the latest data, which is included in the most recently received packet, is stored (S703). The credit controlling unit 15 determines, as the oldest packet, a packet that includes the data corresponding to a data address for which a value that is the lowest of the values for the selected data-address group is set (S705).

When the most significant bits are of two types (No in S702), the credit controlling unit 15 selects, as a target that is searched to find an oldest packet, a data-address group having a most significant bit different from the most significant bit of the address of the latest data which is included in the most recently received packet (S704). Then, the credit controlling unit 15 performs the process of S705.

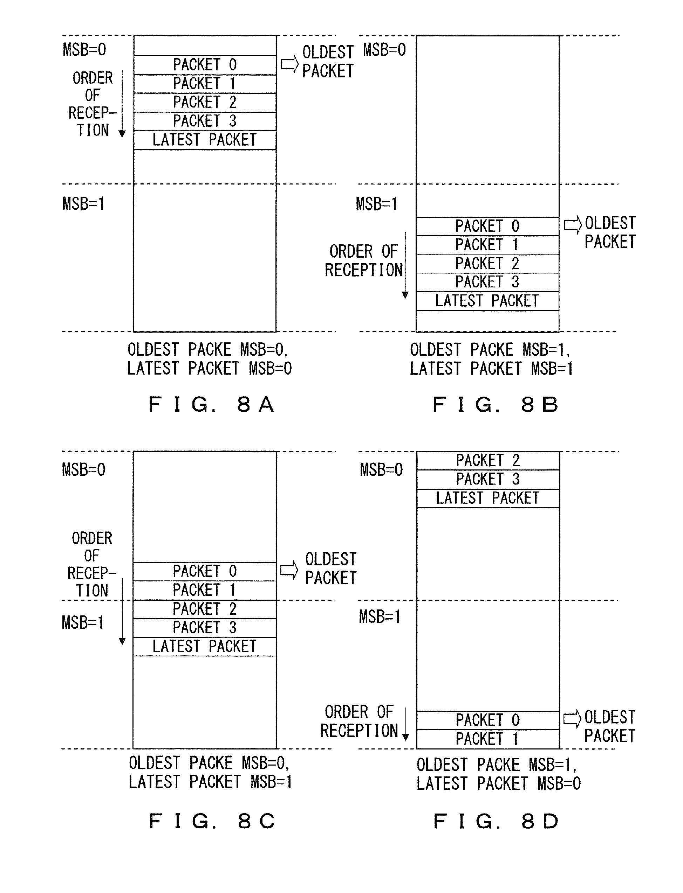

FIG. 8A to FIG. 8D are an explanatory diagram illustrating a process of specifying an address of oldest data.

FIG. 8A and FIG. 8B illustrate a process performed when the credit controlling unit 15 determines the oldest packet of the packets stored in the received-packet storage unit 12 under a condition in which all of the most significant bits stored in the received-packet storage unit 12 are identical with each other (a single kind).

The credit controlling unit 15 references the address table 209 so as to extract the smallest data address from a data-address group having the same most significant bit as the most significant bit of data included in a latest packet. The credit controlling unit 15 determines that a packet that includes the data with the smallest data address that has been extracted is the oldest packet.

FIG. 8C and FIG. 8D illustrate a process performed when the credit controlling unit 15 determines the oldest packet of the packets stored in the received-packet storage unit 12 under a condition in which the most significant bits stored in the received-packet storage unit 12 include 0 and 1 (two kinds).

The credit controlling unit 15 references the address table 209 so as to extract the smallest data address from the data-address group having a most significant bit different the most significant bit of data included in a latest packet. The credit controlling unit 15 determines that a packet that includes the data with the smallest data address that has been extracted is the oldest packet.

With reference to the address table 209, the credit controlling unit 15 may determine whether the received-packet storage unit 12 stores one kind of most significant bit or two kinds of most significant bits.

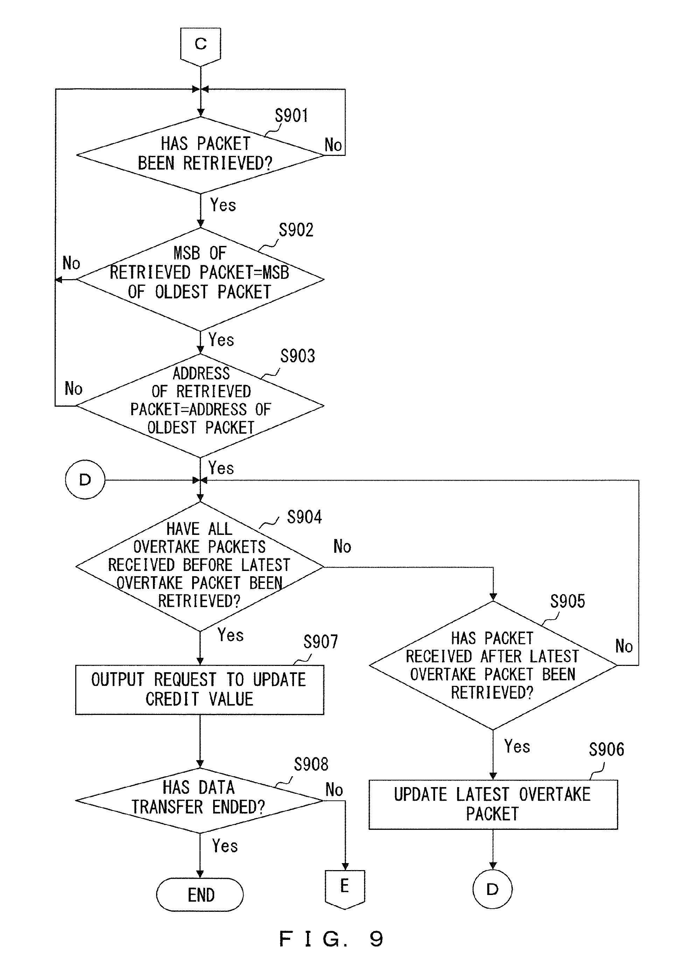

FIG. 9 is a flowchart illustrating details of a process of updating a credit value.

FIG. 9 is a flowchart illustrating details of the process series from a process in which an oldest packet is retrieved after the credit controlling unit 15 determines the oldest packet in the processes illustrated in FIG. 7 to a process in which a request to update a credit value is output.

The credit controlling unit 15 determines whether or not a packet has been retrieved from the received-packet storage unit 12 and determines whether or not a most significant bit and a data address of the data management address associated with retrieved data have been reported from the reporting unit 210 (S901). In accordance with a packet-retrieval request from the processing unit 13, the received-packet storage unit 12 outputs stored packets. That is, the received-packet storage unit 12 retrieves the stored packets in an order in which these packets become retrievable. A most significant bit included in the data management address and associated with retrieved data may hereinafter be referred to as "a most significant bit of a retrieved packet". Moreover, a data address included in the data management address and associated with retrieved data may hereinafter be referred to as "an address of a retrieved packet".

The credit controlling unit 15 repeats the process of S901 until the most significant bit of the retrieved packet and the address of the retrieved packet are reported from the reporting unit 210 (No in S901).

Upon the most significant bit and the address of the retrieved packet being reported from the reporting unit 210 (Yes in S901), the credit controlling unit 15 determines whether the most significant bit of the retrieved packet is the same as a most significant bit of the data management address of data included in an oldest packet (this most significant bit will hereinafter be referred to as "a most significant bit of an oldest packet") (S902). The credit controlling unit 15 repeats the processes of S901 to S902 when the most significant bit of the retrieved packet is different from the most significant bit of the oldest packet (No in S902).

When the most significant bit of the retrieved packet is the same as the most significant bit of the oldest packet (Yes in S902), the credit controlling unit 15 determines whether the address of the retrieved packet is the same as the data address of data included in the oldest packet (this data address may hereinafter be referred to as an address of an oldest packet or a data address of an oldest packet) (S903). When the address of the retrieved packet is different from the address of the oldest packet, the credit controlling unit 15 repeats the processes of S901 to S903 (No in S903).

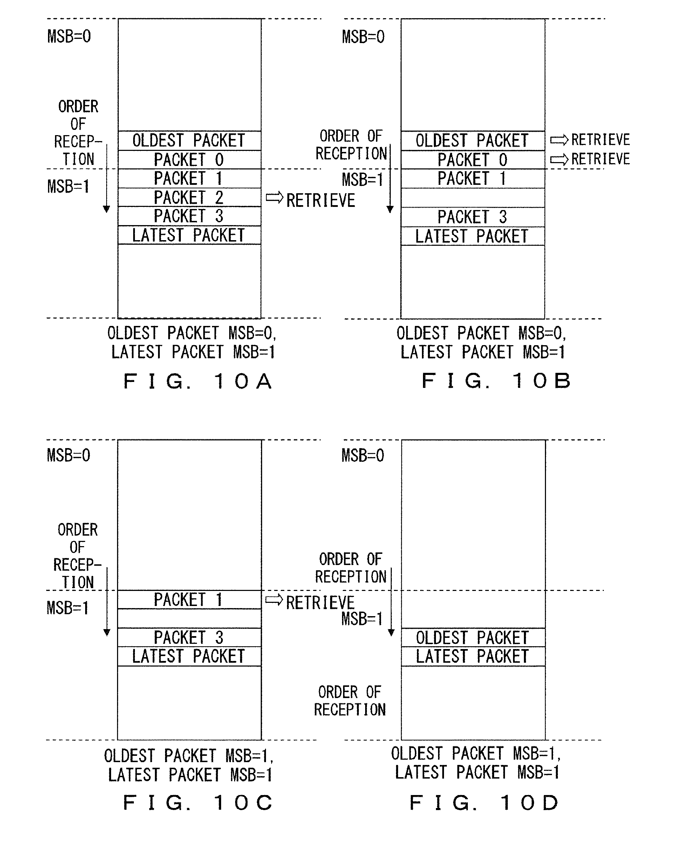

When the address of the retrieved packet is the same as the address of the oldest packet (Yes in S903), the credit controlling unit 15 determines whether or not all of the overtake packets received before a latest overtake packet have been retrieved (S904). The credit controlling unit 15 determines which packet is the latest overtake packet and performs the process of S904 using the result of the determination, and the determining method will be described hereinafter with reference to FIG. 10A to FIG. 10D.

When all of the overtake packets received before the latest overtake packet have not been retrieved (No in S904), it is determined whether or not a packet received after the latest overtake packet has been retrieved (S905).

When a packet received after the latest overtake packet has not been retrieved in S905 (No in S905), the credit controlling unit 15 performs the process of S904.

When a packet received after the latest overtake packet has been retrieved in S905 (Yes in S905), the credit controlling unit 15 updates the latest overtake packet to the packet received after the latest overtake packet (S906). Then, the credit controlling unit 15 performs the process of S904.

When all of the overtake packets received before the latest overtake packet have been retrieved in S904, the credit controlling unit 15 outputs a request to update credit values (S907). Accordingly, a header-credit updated value and a data-credit updated value are transmitted to the data transfer apparatus 2 via the transmitting unit 16, and the header-credit count unit 301 and the data-credit count unit 302 of the data transfer apparatus 2 count the credit value. That is, for the data transfer apparatus 2, the header credit value and the data credit value are updated.

Next, the data transfer apparatus 1 determines whether or not the data transfer has ended (S908). When the data transfer apparatus 1 determines that the data transfer has not ended (No in S908), the data transfer apparatus 1 performs the process of S701.

When the data transfer apparatus 1 determines that the data transfer has ended (Yes in S908), the data transfer apparatus 1 ends the data transfer process.

Note that the process of S902 is omitted when the data count unit 205 does not count most significant bits.

FIG. 10A to FIG. 10D are an explanatory diagram chronologically illustrating an update determination on a credit value.

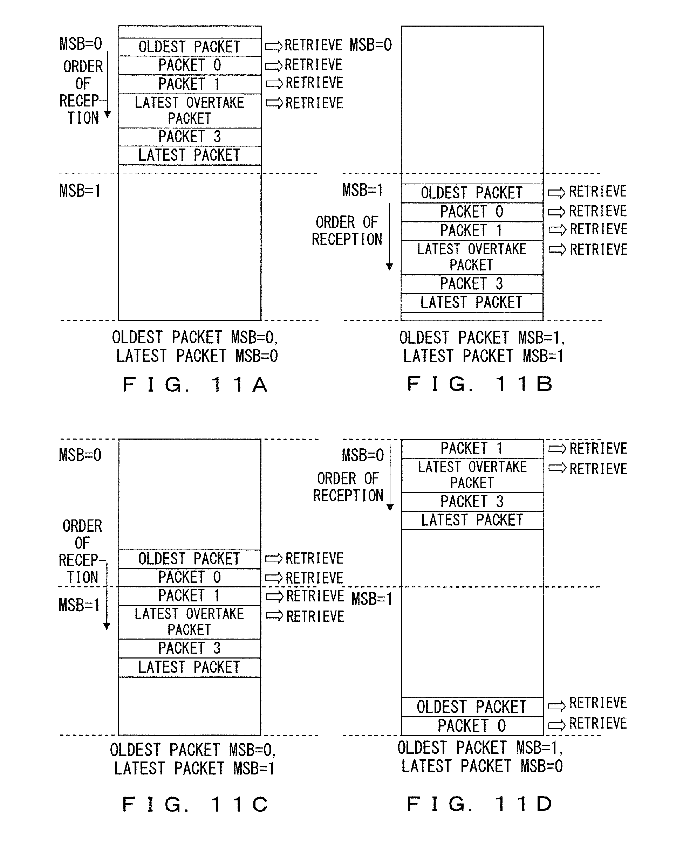

FIG. 10A to FIG. 10D depict processes performed until the credit controlling unit 15 outputs a request to update a credit value under a condition in which a most significant bit of an oldest packet is 0 and a most significant bit of a latest packet is 1. FIG. 10A to FIG. 10D each illustrate packets stored in the data storage region 207. The "order of reception" in FIG. 10 refers to an order in which packets are received from the data transfer apparatus 2. MSB=0 corresponds to a data address group of data included in packets corresponding to a most significant bit of 0. MSB=1 corresponds to a data address group of data included in packets corresponding to a most significant bit of 1. This is also true for FIG. 11 to FIG. 13. The time base is based on the order of "FIG. 10 A→B→C→D".

In FIG. 10A, the credit controlling unit 15 determines, as an oldest packet, a packet that includes data corresponding to the smallest data address of the data address group having its most significant bit different from that of the latest packet.

In FIG. 10B, when the oldest packet is retrieved (Yes in S901, S902 and S903), the credit controlling unit 15 determines a latest overtake packet. For example, the credit controlling unit 15 determines, as a latest overtake packet, packet 2, which has the same most significant bit as the latest packet and corresponds to a data address that is the largest of those of the overtake packets. Then, the credit controlling unit 15 determines whether or not packet 1 is to be retrieved (No in S904). When an overtake packet having the same most significant bit as the latest packet is not present, the credit controlling unit 15 determines, as a latest overtake packet, an overtake packet corresponding to a data address that is the largest of those of the overtake packets. The method used by the credit controlling unit 15 to determine a latest overtake packet is also used for the following descriptions.

In FIG. 10C, when packet 1 has been retrieved and all of the overtake packets received before the latest overtake packet have been retrieved as illustrated in FIG. 10D, the credit controlling unit 15 outputs a request to update the credit value (Yes in S901 to S904). Then, in FIG. 10C, since packet 3 is the oldest packet as a result of the retrieving of packet 1, the credit controlling unit 15 determines packet 3 as an oldest packet as illustrated in FIG. 10D (S701 to S705).

In FIG. 10A to FIG. 10D, blanks are left after packets are retrieved, but, in the case of an actual memory region, the packets may remain preserved with the effectivity of the address table 209 being 0.

FIG. 11A to FIG. 11D are an explanatory diagram illustrating for each pattern an update determination on a credit value.

FIG. 11A depicts packets that have been retrieved when the credit controlling unit 15 outputs a request to update a credit value under a condition in which the most significant bit of the oldest packet is 0 and the most significant bit of the latest packet is 0. FIG. 11B depicts packets that have been retrieved when the credit controlling unit 15 outputs a request to update a credit value under a condition in which the most significant bit of the oldest packet is 1 and the most significant bit of the latest packet is 1. FIG. 11C depicts packets that have been retrieved when the credit controlling unit 15 outputs a request to update a credit value under a condition in which the most significant bit of the oldest packet is 0 and the most significant bit of the latest packet is 1. FIG. 11D depicts packets that have been retrieved when the credit controlling unit 15 outputs a request to update a credit value under a condition in which the most significant bit of the oldest packet is 1 and the most significant bit of the latest packet is 0.

As illustrated in FIG. 11A to FIG. 11D, the credit controlling unit 15 outputs an update request to update a credit value when all of the oldest packet, the latest overtake packet, and the packets received after the oldest packet and before the latest overtake packet are retrieved.

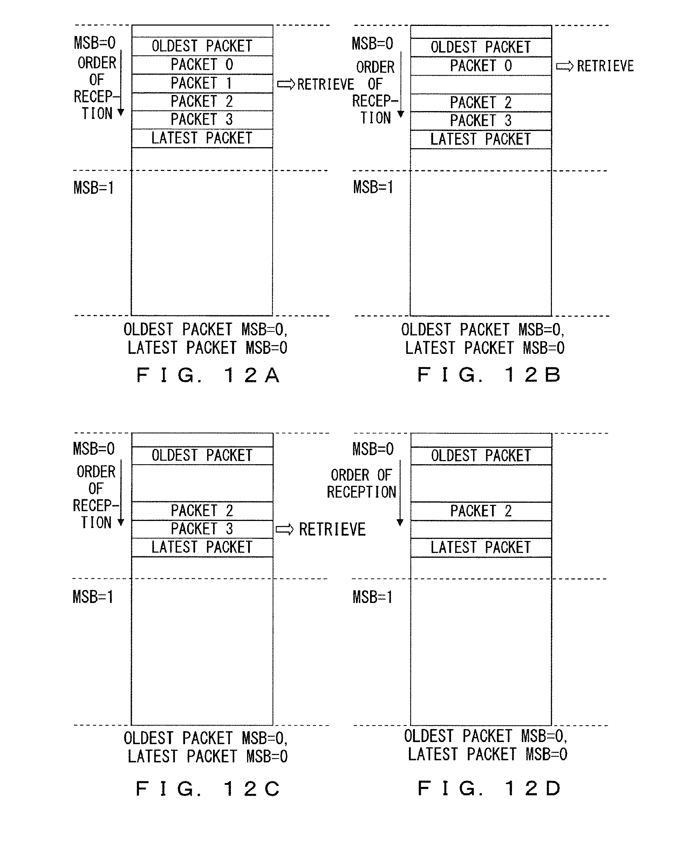

FIG. 12A to FIG. 12D are an explanatory diagram chronologically illustrating updating of a latest overtake packet.

FIG. 12A to FIG. 12D depict a process wherein the credit controlling unit 15 updates a latest overtake packet when the most significant bit of an oldest packet is 0 and the most significant bit of a latest packet is 0.

In FIG. 12A, when the reporting unit 210 reports to the credit controlling unit 15 that packet 1 has been retrieved, the credit controlling unit 15 determines that packet 1 is the latest overtake packet.

In FIG. 12B, when the reporting unit 210 reports to the credit controlling unit 15 that packet 0 has been retrieved, the credit controlling unit 15 still defines packet 1 as the latest overtake packet since packet 0 was received before packet 1 was received.

In FIG. 12C, when packet 3 is retrieved as illustrated in FIG. 12D, the latest overtake packet is updated to packet 3 since packet 3 was received after packet 1 was received.

In FIG. 12A to FIG. 12D, blanks are left after packets are retrieved, but, in the case of an actual memory region, the packets may remain preserved with the effectivity of the address table 209 being 0.

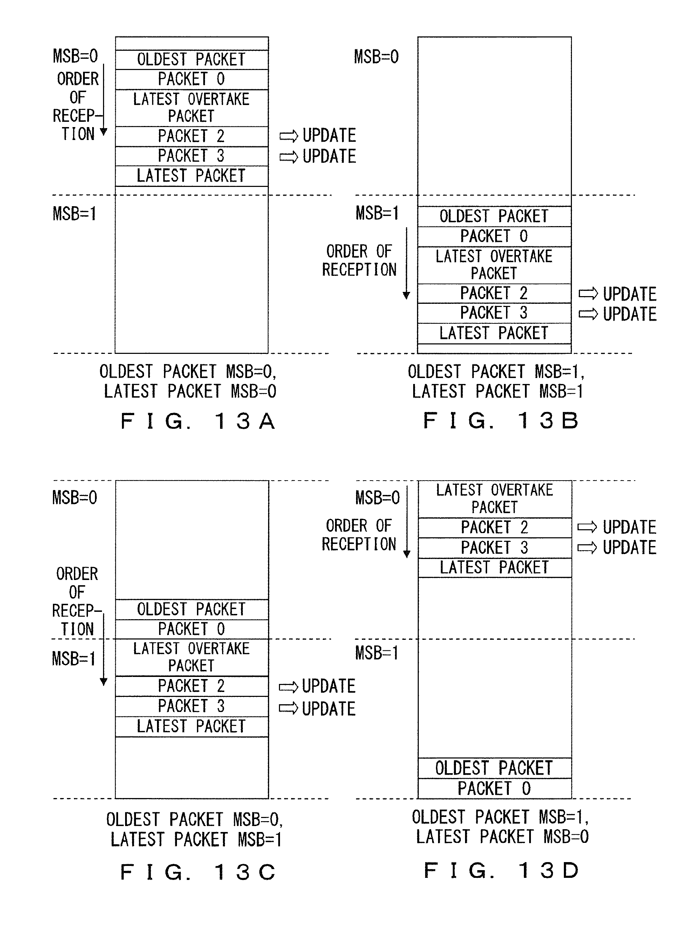

FIG. 13A to FIG. 13D are an explanatory diagram illustrating updating of a latest overtake packet for each pattern.

FIG. 13A depicts updating of a latest overtake packet by the credit controlling unit 15 under a condition in which the most significant bit of an oldest packet is 0 and the most significant bit of a latest packet is 0. FIG. 13B depicts updating of a latest overtake packet by the credit controlling unit 15 under a condition in which the most significant bit of an oldest packet is 1 and the most significant bit of a latest packet is 1. FIG. 13C depicts updating of a latest overtake packet by the credit controlling unit 15 under a condition in which the most significant bit of an oldest packet is 0 and the most significant bit of a latest packet is 1. FIG. 13D depicts updating of a latest overtake packet by the credit controlling unit 15 under a condition in which the most significant bit of an oldest packet is 1 and the most significant bit of a latest packet is 0.

Right arrows in FIG. 13A to FIG. 13D indicate that a packet has been retrieved.

As illustrated in FIG. 13A to FIG. 13D, when packet 2 or 3, both received after the latest overtake packet, is retrieved from the received-packet storage unit 12, the credit controlling unit 15 defines the retrieved packet, i.e., packet 2 or 3, as a latest overtake packet. When packet 2 is retrieved, the credit controlling unit 15 defines packet 2 as a latest overtake packet. Next, when packet 3 is retrieved, the credit controlling unit 15 defines packet 3 as a latest overtake packet since packet 3 was received from a source apparatus after packet 2 was received.

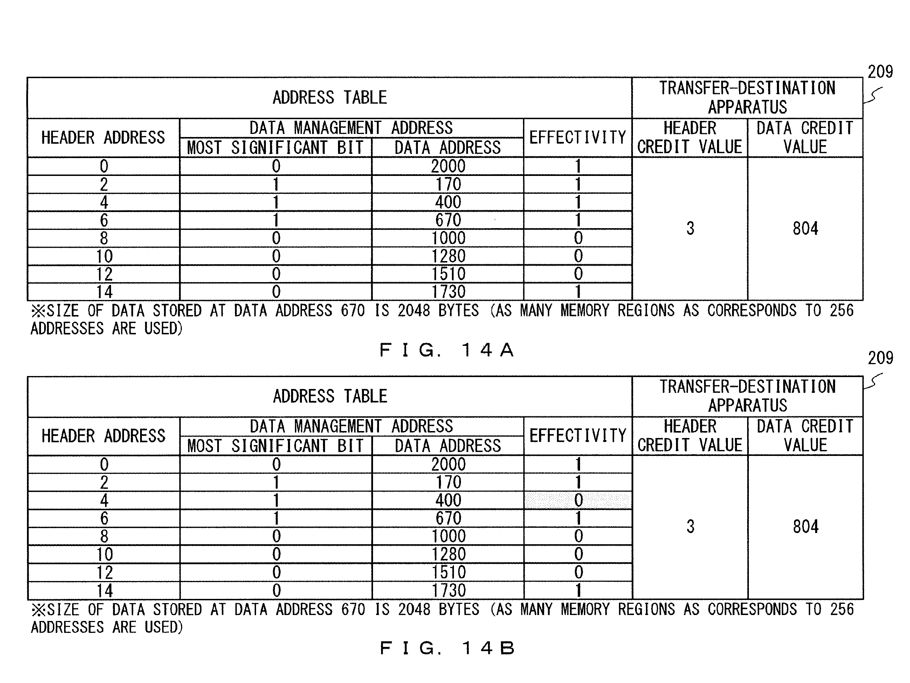

FIG. 14 to FIG. 18 are tables illustrating values stored in an address table in transferring of data.

With reference to FIG. 14 to FIG. 18, an example of the process illustrated in FIG. 9 will be described. FIG. 14 to FIG. 17 illustrate values stored in the address table 209 in a series of processes.

In FIG. 14A, the data address of the oldest packet is 1730. The header address of the header included in the oldest packet (hereinafter referred to as the header address of the oldest packet) is 14.

As an example, descriptions will be given of a determination made by the credit controlling unit 15 on the data address of the oldest packet and on the header address of the oldest packet. The credit controlling unit 15 references the address table 209 in FIG. 14A so as to extract data addresses associated with an effectivity of 1. In addition, since two kinds of most significant bits are associated with the extracted data addresses, the credit controlling unit 15 extracts data addresses associated with the most significant bit that is different from the most significant bit of the latest packet. The credit controlling unit 15 then determines that 1730, which corresponds to the data address that is the smallest of the extracted data addresses, is the data address of the oldest packet. Moreover, the credit controlling unit 15 references the header address associated with data address 1730 and determines that the header address of the oldest packet is 14.

FIG. 14A illustrates the credit controlling unit 15 just after this unit outputs a request to update a credit value, wherein 3 and 804 are respectively stored as a header credit value and a data credit value in the data transfer apparatus 2. As an example, the header credit value is the same as the number of effectivities 0 at the time of making a request to update the credit value. Thus, for FIG. 14A, the header credit value is 3.

As an example, the data credit value corresponds to the number of data addresses corresponding to memory regions of the data storage region 207 that are not in use. Thus, for FIG. 14A, the data credit value is 1730-(670+256)=804. The following descriptions are based on the assumption that header credit values and data credit values are similarly calculated by the credit controlling unit 15.

In FIG. 14B, when a packet that includes a header stored at header address 4 is retrieved, the address-table generating unit 208 sets 0 as an effectivity in the address table 209 that corresponds to header address 4.

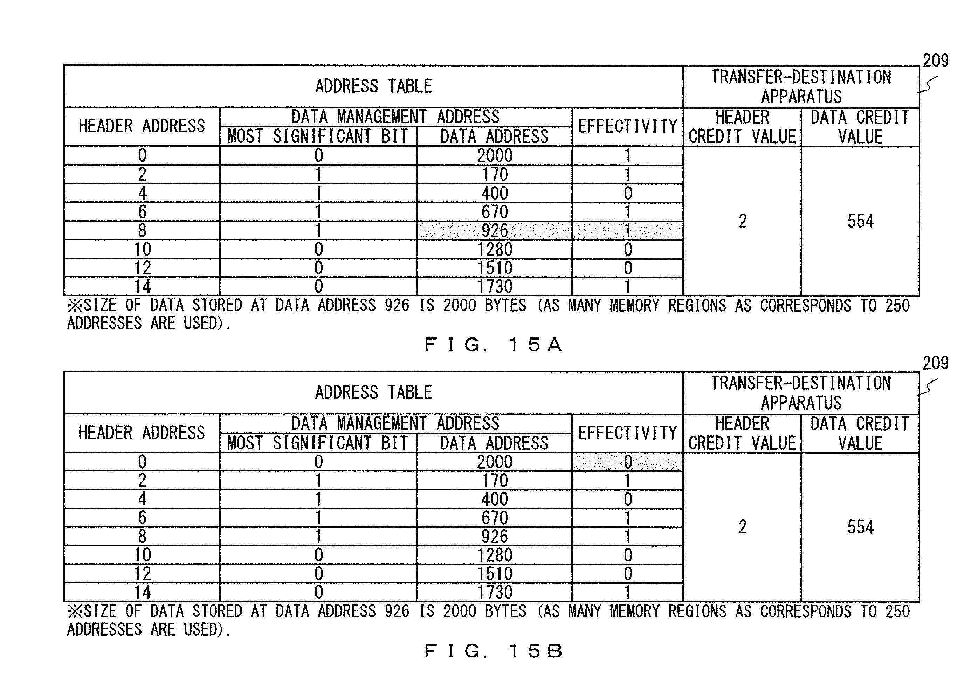

In FIG. 15A, upon receipt of a packet, the header-address setting unit 203 stores a header included in the packet in a memory region corresponding to header address 8.

Also, in FIG. 15A, when the data-address setting unit 206 has stored, at data address 670, 2048 bytes of data included in the previous packet, the data-address setting unit 206 sets 670+2048/8=926 as a data address at which data included in the current packet is stored. The address-table generating unit 208 sets 1 as an effectivity corresponding to header address 8 in the address table 209.

In FIG. 15B, when a packet that includes a header stored at header address 0 is retrieved, the address-table generating unit 208 sets 0 as an effectivity in the address table 209 that corresponds to header address 0.

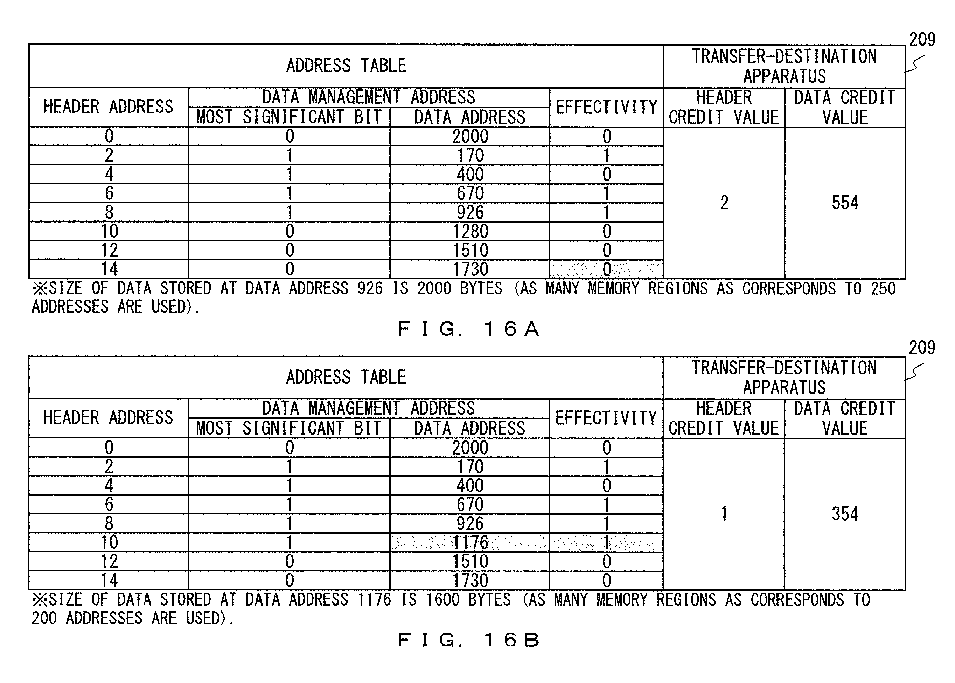

In FIG. 16A, when a packet that includes a header stored at header address 14 is retrieved, the address-table generating unit 208 sets 0 as an effectivity in the address table 209 that corresponds to header address 14.

In FIG. 16B, upon receipt of a packet, the header-address setting unit 203 stores a header included in the packet in a memory region corresponding to header address 10.

Also, in FIG. 16B. when the data-address setting unit 206 has stored, at data address 670, 2000 bytes of data included in the previous packet, the data-address setting unit 206 sets 926+2000/8=1176 as a data address at which data included in the current packet is stored. The address-table generating unit 208 sets 1 as an effectivity corresponding to header address 10 in the address table 209.

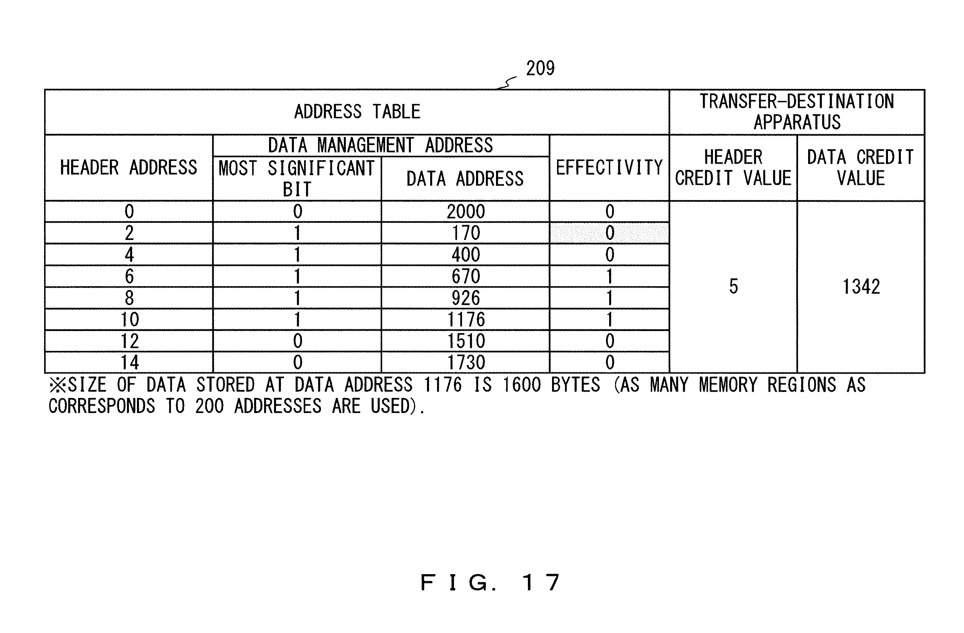

In FIG. 17, when a packet that includes a header stored at header address 2 is retrieved, the address-table generating unit 208 sets 0 as an effectivity in the address table 209 that corresponds to header address 14. The credit controlling unit 15 determines that a judgment of "Yes" is obtained in S902 to S904 and outputs a request to update the credit value.

In this case, as a header-credit updated value, the credit controlling unit 15 transmits, to the data transfer apparatus 2, 4, which is the number of headers that can be stored at the eight addresses, header addresses 14 and 15 and header addresses 0 to 5, for which an effectivity has newly become 0 in the header storage region 204.

That is, as a request to update a credit value, the credit controlling unit 15 defines, as a header-credit updated value, the number of headers associated with a header address group from the header address of the header included in an oldest packet to the header address at which a header is subsequently stored. Then, the credit controlling unit 15 outputs a request to add the header-credit updated value to the header credit value of the header-credit count unit 301 which the data transfer apparatus 2 includes.

Meanwhile, as a data-credit updated value, the credit controlling unit 15 transmits, to the data transfer apparatus 2, the number of data addresses corresponding to 1730 to 2047 and 0 to 669, which are data addresses for which an effectivity has newly become 0 in the data storage region 207. The credit controlling unit 15 defines (2047-1730+1)+(669-0+1)=988 as a data-credit updated value.

That is, as a request to update a credit value, the credit controlling unit 15 may define, as a data-credit updated value, a value that is proportional to the size of memory regions designated by a data address group from the data address of data included in an oldest packet to the data address at which data is subsequently stored. Then, the credit controlling unit 15 outputs a request to add the data-credit updated value to the data credit value of the data-credit count unit 302 which the data transfer apparatus 2 includes.

Accordingly, the header-credit updated value and the data-credit updated value are transmitted via the transmitting unit 16 to the data transfer apparatus 2, and the credit values are counted by the header-credit count unit 301 and the data-credit count unit 302 of the data transfer apparatus 2. Then, the data transfer apparatus 2 stores 5 as the header credit value and 1342 as the data credit value.

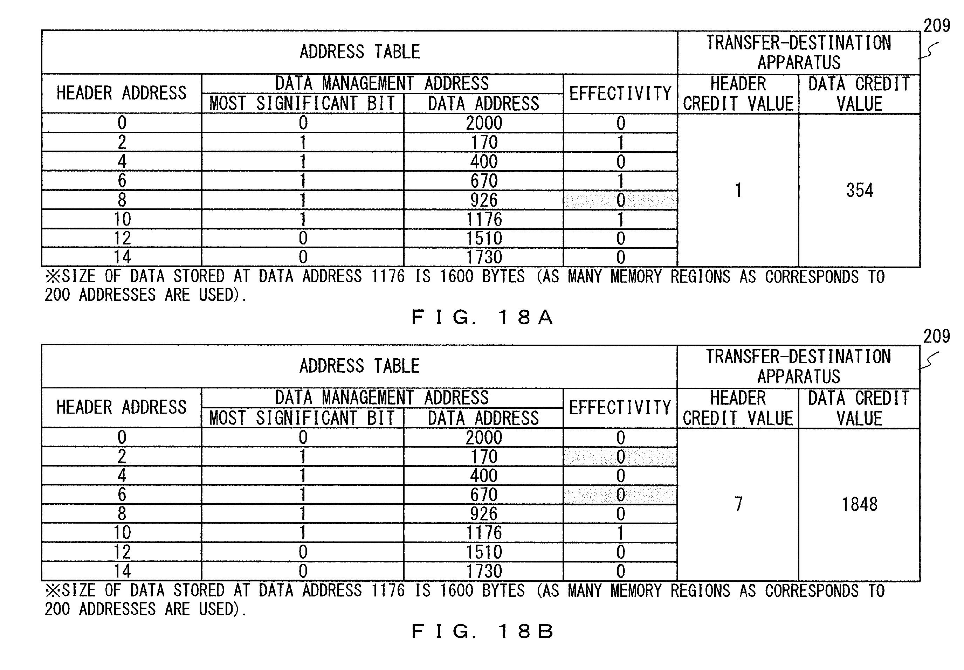

FIG. 18A illustrates FIG. 16B with a packet that includes the header stored at header address 8 retrieved. In this case, the address-table generating unit 208 sets 0 as an effectivity corresponding to header address 8 in the address table 209 (Yes in S905).

In this case, the credit controlling unit 15 updates the latest overtake packet to a packet that includes the header stored at header address 8 (S906).

Then, referring to FIG. 18B, when the packet that includes the header stored at header address 2 and the packet that includes the header stored at header address 6 are retrieved, the address-table generating unit 208 sets 0 as the effectivities corresponding to these addresses. The credit controlling unit 15 determines that a judgment of "Yes" is obtained in S902 to S904 and outputs a request to update the credit value.

In this case, as a header-credit updated value, the credit controlling unit 15 transmits, to the data transfer apparatus 2, 6, which is the number of headers that can be stored at the twelve addresses, header addresses 14 and 15 and header addresses 0 to 9, for which an effectivity has newly become 0 in the header storage region 204.

Meanwhile, as a data-credit updated value, the credit controlling unit 15 transmits, to the data transfer apparatus 2, the number of data addresses corresponding to 1730 to 2047 and 0 to 1175, which are data addresses for which an effectivity has newly become 0 in the data storage region 207. The credit controlling unit 15 defines (2047-1730+1)+(1175-0+1)=1494 as a data-credit updated value.

Accordingly, the header-credit updated value and the data-credit updated value are transmitted via the transmitting unit 16 to the data transfer apparatus 2, and the credit values are counted by the header-credit count unit 301 and the data-credit count unit 302 of the data transfer apparatus 2. Then, the data transfer apparatus 2 stores 7 as the header credit value and 1848 as the data credit value.

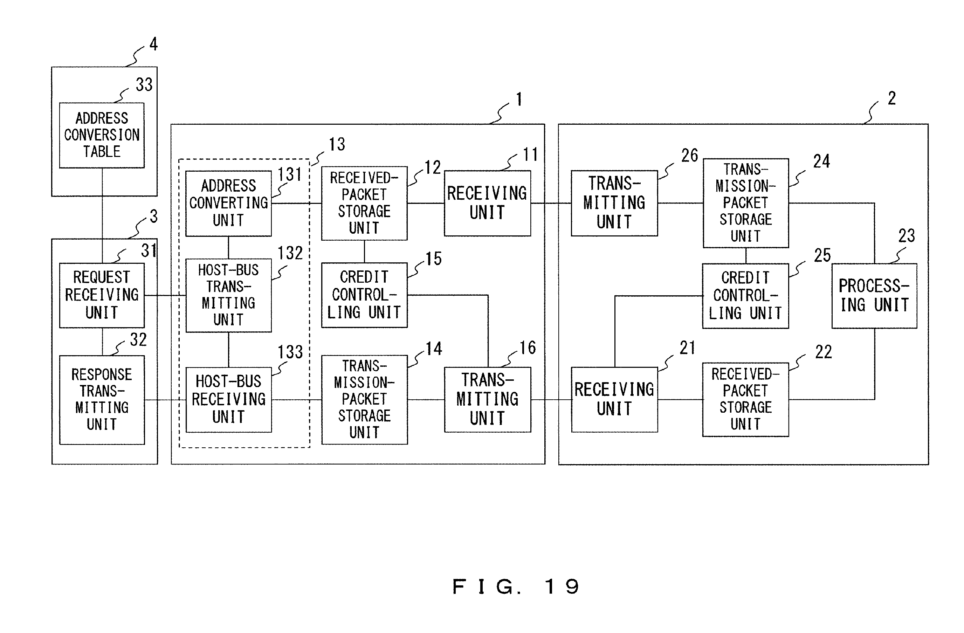

FIG. 19 is a functional block diagram provided under a condition in which a data transfer apparatus in accordance with an embodiment is applied to PCIe.

FIG. 19 illustrates the processing unit 13 of the data transfer apparatus 1 in FIG. 1 with an address converting unit 131, a host-bus transmitting unit 132, and a host-bus receiving unit 133 provided. The host-bus transmitting unit 132 and the host-bus receiving unit 133 are connected to, for example, a memory 4 via a host bus 3. The host bus 3 includes a request receiving unit 31 and a response transmitting unit 32. The memory 4 includes an address conversion table 33.

Referring to FIG. 19, the data transfer apparatus 1 is a route complex. The data transfer apparatus 2 is an end point.

For FIG. 19, descriptions will be given of functions not illustrated in FIG. 1.

Upon input of a virtual address, the address converting unit 131 transmits, via the host-bus transmitting unit 132 to the memory 4, a request to fetch (read) the address conversion table 33 of the memory 4. Then, by referencing an entry of the address conversion table 33 obtained as a response from the memory 4, the virtual address is converted into a physical address. In addition, a request to store data stored by the received-packet storage unit 12 in a corresponding memory region on the memory 4 designated by the physical address is transmitted via the host-bus transmitting unit 132.

The host-bus transmitting unit 132 transmits, via the host bus 3 to the memory 4, a packet that is output from the data transfer apparatus 1 and that includes a request to process data.

The host-bus receiving unit 133 receives a response from the memory 4 to the packet that includes a request to process data, the response being transmitted via the host bus 3.

The request receiving unit 31 receives and transfers, to the memory 4, the packet that is transmitted from the host-bus transmitting unit 132 and that includes a request to process data.

The response transmitting unit 32 transfers, to the host-bus receiving unit 133, the response output from the memory 4 to the packet that includes a request to process data.

The address conversion table 33 associates a virtual address with a physical address so as to convert the virtual address into the physical address.

A data transfer apparatus in accordance with an embodiment may be used as the request receiving unit 31 and the response transmitting unit 32.

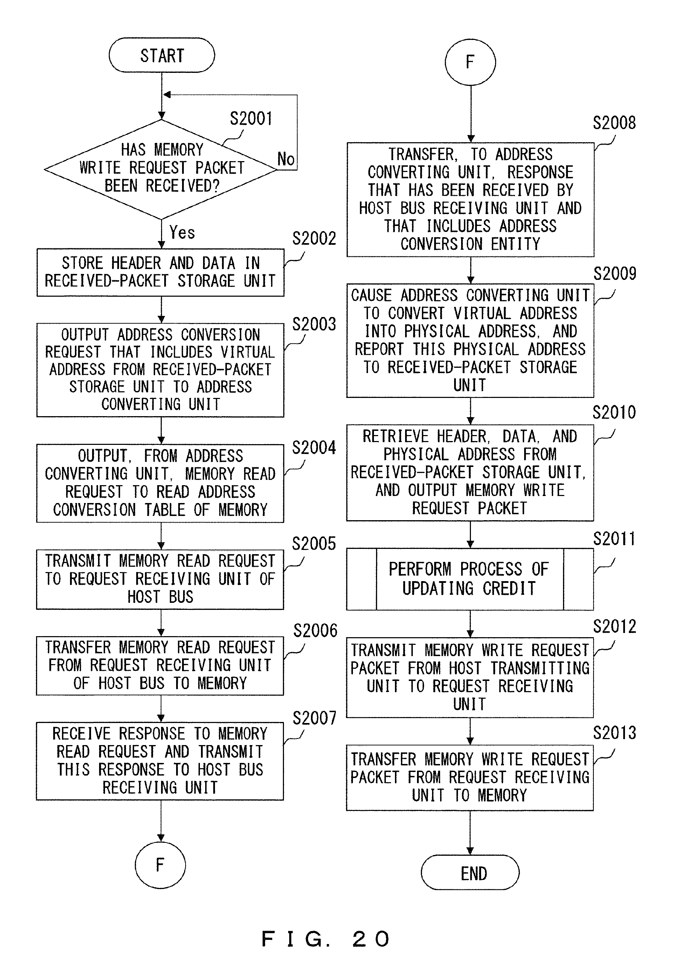

FIG. 20 is a flowchart illustrating details of a process of transferring data in writing of data to a memory under a condition in which a data transfer apparatus in accordance with an embodiment is applied to PCIe.

A memory write request packet that makes a request to write data to the memory 4 is transmitted from the data transfer apparatus 2 to the data transfer apparatus 1. Upon receipt of the memory write request packet (Yes in S2001), the data transfer apparatus 1 causes the packet dividing unit 201 to divide the packet into a header and data and stores this header and this data in the header storage region 204 and the data storage region 207, respectively (S2002). Until the data transfer apparatus 1 receives a memory write request packet, the data transfer apparatus 1 repeats the process of S2001 (No in S2001).

The received-packet storage unit 12 outputs to the address converting unit 131 an address conversion request that includes a virtual address included in the memory write request packet (S2003).

A memory read request to read the address conversion table of the memory 4 is output from the address conversion unit 131 (S2004), and the memory read request is transmitted via the host-bus transmitting unit 132 to the request receiving unit 31 of the host bus 3 (S2005).

The request receiving unit 31 transfers the received memory read request to the memory 4 (S2006).

As a response to the memory read request to read the address conversion table 33, the response transmitting unit 32 receives from the memory 4 a response (a response packet) that includes an address conversion entity that indicates a correspondence between a virtual address and a physical address stored in the address conversion table 33. The response transmitting unit 32 transmits the response that includes an address conversion entity to the host-bus receiving unit 133 via the host bus 3 (S2007).

The host-bus receiving unit 133 transfers to the address converting unit 131 the response that includes an address conversion entity (S2008).

The address converting unit 131 interprets information of the address conversion entity that has been input, converts the virtual address into a physical address, and reports this physical address to the received-packet storage unit 12 (S2009).

The processing unit 13 extracts from the received-packet storage unit 12 the header, the data, and the physical address of the memory write request packet. The processing unit 13 retrieves the extracted header and the extracted data and outputs the memory write request packet, which holds the physical address, to the host-bus transmitting unit 132 (S2010).

The data transfer apparatus 1 performs the process of specifying the address of oldest data and the process of updating a credit value (S2011), both of which were described with reference to S701 to S705 and S901 to S908. The method of specifying an oldest packet may be performed before S2011.

The host-bus transmitting unit 132 transmits the memory write request packet to the request receiving unit 31 via the host bus 3 (S2012).

The memory write request packet received by the request receiving unit 31 is transferred to the memory 4, thereby writing the data included in the memory write request packet in a memory region of the memory 4 that corresponds to the physical address held by the memory write request packet (S2013).

The data transfer apparatus 1, i.e., a data transfer apparatus described so far, may retrieve packets from the received-packet storage unit 12 in an order that is different from the order in which these packets were received from the data transfer apparatus 2. That is, the data transfer apparatus 1 is configured so that a packet subsequently received can be transferred to a transfer-destination apparatus before a packet previously received is transferred.

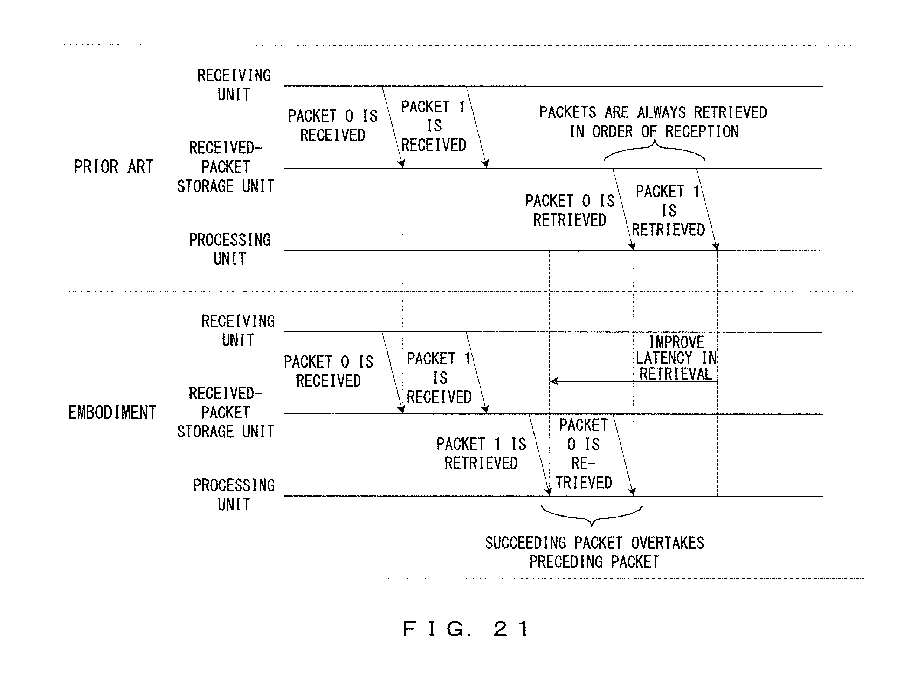

In view of the aforementioned configuration, assume, for example, that the data transfer apparatus 1 has received packets 0 and 1 in this order from the data transfer apparatus 2, as illustrated in FIG. 21. Also assume that the data transfer apparatus 1 has received from a transfer-destination apparatus (the processing unit 13) a request to retrieve packet 1 before the data transfer apparatus 1 receives a request to retrieve packet 0.

In such a case, as illustrated in FIG. 21, a prior-art data transfer apparatus always retrieves and moves packets into a processing unit in order of reception, so packet 0 is retrieved and then packet 1 is then retrieved. By contrast, in accordance with a packet-retrieval request from a transfer-destination apparatus, the data transfer apparatus 1 in accordance with the embodiment retrieves packet 1 and then retrieves packet 0. That is, the data transfer apparatus 1 in accordance with the embodiment transmits a packet required for data processing by a transfer-destination apparatus when needed. Thus, the data transfer apparatus 1 in accordance with the embodiment may improve latency in packet retrieval. As a result, the data transfer apparatus 1 in accordance with the embodiment may shorten the time period during which data processing by a transfer-destination apparatus is held up to wait for reception of a required packet, and may shorten the period of time before a reception request for a next packet is received from the transfer-destination apparatus. Accordingly, the data transfer apparatus 1 in accordance with the embodiment may improve the throughput of data transfer.

The data transfer apparatus 1 described above is configured in a manner such that the size of a memory region of the data storage region 207 in which one piece of data is stored is not fixed but rather the size depends on data size. In the following, advantageous effects achieved by the configuration of the data transfer apparatus 1 in accordance with the embodiment will be described in view of a comparison with the prior art.

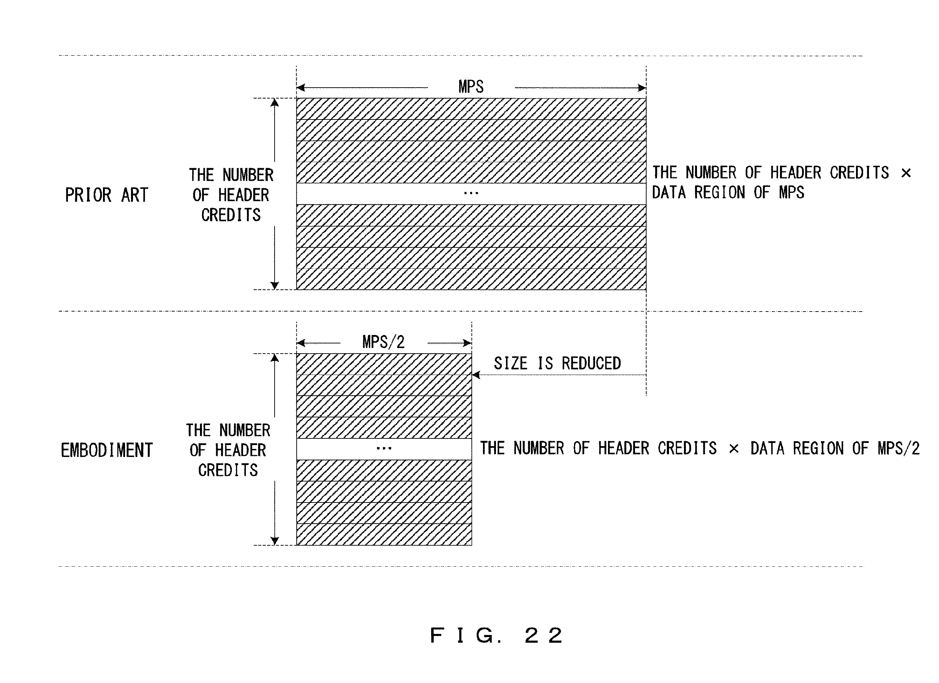

As illustrated in FIG. 22, a prior-art data transfer apparatus stores one piece of data using a memory region whose size is the same as the maximum value of the size (MPS: Maximum Payload Size) of data included in a packet. In this case, even though the size of data is less than the maximum value, a memory region of the data storage region 207 whose size is the same as the maximum value of the size of data is used. However, in fact, the size of data included in a packet is often approximately the same as half the maximum value, so the resource of the data storage region 207 is not effectively utilized.

By contrast, in accordance with the size of data included in a received packet, the data transfer apparatus 1 in accordance with the embodiment sets the size of a memory region to be used (the number of addresses) of the data storage region 207, so that the resource of the data storage region 207 can be effectively utilized. Accordingly, even though the size of the data storage region 207 is about "header credit value×MPS/2", the data transfer apparatus 1 in accordance with the embodiment may store approximately as much data as can be stored by the prior-art data transfer apparatus.

When an oldest packet is retrieved, the data transfer apparatus 1 in accordance with the embodiment simultaneously updates a credit value corresponding to an overtake packet. Thus, in comparison with a prior art in which a credit value is updated every time one packet is retrieved, the data transfer apparatus 1 in accordance with the embodiment decreases the number of times the credit value is updated. As a result, in comparison with the prior-art data transfer apparatus, the data transfer apparatus 1 in accordance with the embodiment may decrease the overhead of the updating of a credit value. Accordingly, the data transfer apparatus 1 in accordance with the embodiment may improve the throughput of data transfer.

## Claims

1. A data transfer apparatus (1, 2) comprising:
a received-packet storage unit (12, 22) configured to store a packet received from a source apparatus, the received-packet storage unit (12, 22) being capable of retrieving the stored packets in an order that is different from an order in which the stored packets were received;
a credit controlling unit (15, 25) configured to
output a request to update a credit value indicating a size of data which the received-packet storage unit is capable of receiving, when an oldest packet, which is a packet initially received from the source apparatus, is retrieved from the packets stored in the received-packet storage unit; and
a transmitting unit (16, 26) configured to transmit, to the source apparatus, the request to update the credit value output from the credit controlling unit.

2. The data transfer apparatus (1, 2) according to claim 1, wherein
the credit controlling unit (15, 25) further outputs the request to update the credit value when succeeding packets, which are packets received after the oldest packet from the source apparatus, include an overtake packet retrieved prior to the oldest packet from the received-packet storage unit under a condition in which the oldest packet has been retrieved from the received-packet storage unit and all succeeding packets received prior to a latest overtake packet, which is a packet received most recently from the source apparatus from among the overtake packets, have been retrieved.

3. The data transfer apparatus (1, 2) according to claim 1 or 2, wherein
the received-packet storage unit includes a data storage region in which data included in the packet is stored, and
the data transfer apparatus further comprises:
a data address setting unit (206) configured to set, for the data, a data address that designates a memory region of the data storage region in which the data is stored;
an address table generating unit (208) configured to generate an address table, the address table associating the data address that is set by the data address setting unit with data identification information that identifies the data, the address table storing the data address and the data identification information associated with each other; and
a reporting unit (210) configured to, when a packet is retrieved from the received-packet storage unit, extract, from the address table, a data address associated with data identification information of data included in the packet, and to report the extracted data address to the credit controlling unit, wherein
upon a data address being reported from the data reporting unit, the credit controlling unit (15, 25) further determines that the oldest packet has been retrieved from the received-packet storage unit when the reported data address is identical with a data address of data included in the oldest packet.

4. The data transfer apparatus (1, 2) according to claim 3 or 4, further comprising:
a data count unit (205) configured to, every time the packet is received from the source apparatus, divide a size of the data included in the packet by a size of a memory region allocated for each of the data addresses, and to cyclically count a value obtained from the dividing until the value becomes the number of the data addresses set for the data storage region, with 1 bit being added to this number as a most significant bit, wherein
the data address setting unit (206) sets, as the data address of the data included in the received packet, the value counted upon receipt of a previous packet at the data count unit with a most significant bit being subtracted from this value,
the address table generating unit (208) generates an address table that associates, for each of the packets, the most significant bit, the data address, and the data identification information with each other and that stores the most significant bit, the data address, and the data identification information associated with each other,
when a packet is retrieved from the received-packet storage unit, the reporting unit (210) extracts from the address table a most significant bit and a data address of data included in the retrieved packet and reports the extracted most significant bit and the extracted data address to the credit controlling unit,
when one kind of most significant bit is associated with the data addresses of pieces of data stored in the received-packet storage unit, the credit controlling unit (15, 25) determines that a packet that includes data corresponding to the data address for which a lowest value is set is an oldest packet,
when two kinds of most significant bits are associated with the data addresses of pieces of data stored in the received-packet storage unit, the credit controlling unit (15, 25) determines that a packet that includes data corresponding to the data address for which the lowest value is set from among the data addresses associated with the most significant bit different from the most significant bit that is associated with the data address of the latest packet received most recently from the source apparatus is an oldest packet, and
upon a most significant bit and a data address being reported from the data reporting unit, the credit controlling unit (15, 25) determines that the oldest packet has been retrieved from the received-packet storage unit when the reported most significant bit and the reported data address are identical with the most significant bit and the data address of data included in the oldest packet.

5. The data transfer apparatus (1, 2) according to claim 3 or 4, wherein
in making a request to update the credit value, the credit controlling unit (15, 25) further outputs a request to add, to a data credit value which the source apparatus has, a data-credit updated value that is proportional to the size of a memory region associated with data addresses from the data address of data included in the oldest packet to a data address at which data is subsequently stored.

6. The data transfer apparatus (1, 2) according to any of claims 3 to 5, wherein
the received-packet storage unit includes a header storage region in which a header included in the packet is stored, and
the data transfer apparatus further comprises:
a header address setting unit (203) configured to set, for the header, a header address that designates a memory region of the header storage region in which the header is stored, and
the address table generating unit (208) generates an address table, the address table associating the header address that is set by the header address setting unit, header identification information that identifies the header, the data address that is set by the data address setting unit, and data identification information that identifies the data with each other, the address table storing the header address, the header identification information, the data address, and the data identification information which are associated with each other.

7. The data transfer apparatus (1, 2) according to claim 6, further comprising:
a header count unit (202) configured to, every time the packet is received from the source apparatus, cyclically count a value that is proportional to the size of the received header until the value becomes the number of the header addresses set for the header storage region, wherein
the header address setting unit (203) sets, as the header address of the header included in the received packet, the value counted upon receipt of a previous packet at the header count unit from the source apparatus.

8. The data transfer apparatus (1, 2) according to claim 6 or 7, wherein
in making a request to update the credit value, the credit controlling unit (15, 25) further outputs a request to add, to a header credit value which the source apparatus has, a header-credit updated value that is the number of headers associated with header addresses from the header address of a header included in the oldest packet to a header address at which a header is subsequently stored.

9. The data transfer apparatus (1, 2) according to any of claims 6 to 8, further comprising:
a processing unit (13, 23) configured to reference the address table when a packet becomes retrievable, to extract the header and the data of the packet for which a retrieval request has been made, to generate a packet that includes the extracted header and the extracted data, and to transmit the generated packet to a transfer-destination apparatus.

10. The data transfer apparatus (1, 2) according to any of claims 1 to 9, further comprising:
a transmission-packet storage unit (14) configured to store a packet to be transmitted to a transfer-destination apparatus;
a data credit count unit (301) configured to calculate a data credit value by counting a data-credit updated value that is proportional to the size of data receivable by the transfer-destination apparatus, the data-credit updated value being received from the transfer-destination apparatus;
a header credit count unit (302) configured to calculate a header credit value by counting a header-credit updated value that is the number of headers receivable by the transfer-destination apparatus, the header-credit updated value being received from the transfer-destination apparatus; and
a transmission controlling unit (303) configured to retrieve a packet from the transmission-packet storage unit when the data credit value indicates that data whose size is equal to or larger than the size of data included in the packet to be transmitted is transmittable and the header credit value is one or higher, and to output the retrieved packet to a transmitting unit.

11. A data transfer method performed by a computer, the data transfer method comprising:
storing a packet received from a source apparatus in a received-packet storage unit configured to store the packet (S505, S506);
retrieving the packets stored in the received-packet storage unit in an order in which the packets become retrievable (S901); and
outputting a request to update a credit value that indicates a size of data receivable by the received-packet storage unit when an oldest packet, which is a packet initially received from the source apparatus, is retrieved from the packets stored in the received-packet storage unit (S902, S903, S907).

12. A data transfer program for causing a computer to perform a process of controlling data transfer, the process comprising:
storing a packet received from a source apparatus in a received-packet storage unit configured to store the packet (S505, S506);
retrieving the packets stored in the received-packet storage unit in an order in which the packets become retrievable (S901); and
outputting a request to update a credit value that indicates a size of data receivable by the received-packet storage unit when an oldest packet, which is a packet initially received from the source apparatus, is retrieved from the packets stored in the received-packet storage unit (S902, S903, S907).
